(19) Europäisches Patentamt
European Patent Office
Office européen des brevets

(11) EP 3 896 101 B1

(12) EUROPEAN PATENT SPECIFICATION

(45) Date of publication and mention of the grant of the patent:
**07.08.2024 Bulletin 2024/32**

(21) Application number: **20170148.9**

(22) Date of filing: **17.04.2020**

(51) International Patent Classification (IPC):
***C08F 210/06*** (2006.01) ***C08L 23/14*** (2006.01)
***C08F 255/02*** (2006.01) ***C08F 4/6592*** (2006.01)

(52) Cooperative Patent Classification (CPC):
(C-Sets available)
**C08F 210/06; C08F 255/02; C08L 23/142;**
C08F 4/65908; C08F 4/65912; C08F 4/65916;
C08L 2205/025; C08L 2308/00; C08L 2312/00;
C08L 2314/06 (Cont.)

(54) **HMS POLYPROPYLENE FOR FOAMS**

HMS-POLYPROPYLEN FÜR SCHAUMSTOFFE

POLYPROPYLÈNE HMS POUR MOUSSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietor: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **LESKINEN, Pauli**
  **06101 Porvoo (FI)**
- **BERNREITNER, Klaus**
  **4021 Linz (AT)**
- **KLIMKE, Katja**
  **4021 Linz (AT)**
- **BRAUN, Hermann**
  **4021 Linz (AT)**
- **TYNYS, Antti Tapio**
  **4021 Linz (AT)**
- **SOBCZAK, Lukas**
  **4021 Linz (AT)**

(74) Representative: **Maiwald GmbH**
**Elisenhof**
**Elisenstraße 3**
**80335 München (DE)**

(56) References cited:
**EP-A1- 3 018 153** **WO-A1-2020/074335**
**CN-A- 105 440 216** **CN-A- 108 484 810**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 4/65927;**
**C08F 255/02, C08F 236/06;**
**C08L 23/142, C08L 23/142;**
C08F 210/06, C08F 210/14, C08F 2500/12, C08F 2500/27;
C08F 210/06, C08F 210/16, C08F 210/14, C08F 2500/11, C08F 2500/12, C08F 2500/36, C08F 2500/27, C08F 2500/35, C08F 2500/33, C08F 2500/34;
C08F 210/06, C08F 210/16, C08F 210/14, C08F 2500/12

## Description

The present invention relates to a high melt strength polypropylene (HMS-PP), a process for preparing such a polypropylene by means of post reactor modification, a foamed article comprising such a high melt strength polypropylene (HMS-PP), and to the use of such a polypropylene for the production of a foamed article.

High melt strength polypropylene is one of the popular choices for the production of foamed articles due to the excellent temperature and chemical resistance, and especially due to its exceptional melt strength. The current solutions on the market of high melt strength polypropylenes are modified propylene homopolymers or modified random propylene-ethylene copolymers, which are well suited for a variety of applications. However, more demanding properties are required by the end applications, especially in the area of automotive seating, impact cushioning, sport shoe construction and protective packaging. It is especially required to enhance melt strength, to lower gel content, i.e. the amount of xylene hot insolubles (XHU), and to improve extensibility. Another drawback of the current materials its rather high oligomer content, which is reflected by a high xylene cold soluble (XCS) content. However high amounts of xylene cold solubles are not accepted in the packaging industry, especially in food packaging.

CN 105440216 A describes a high-melt-strength polypropylene prepared from the following raw materials in parts by weight: 100 parts of polypropylene resin, 0.1-10 parts of a branching accelerator, 0.1-5 parts of a third monomer, 0.01-2 parts of a crosslinking agent I, 0.01-2 parts of a crosslinking agent II, 0.1-2 parts of an antioxidant, and 0.05-0.3 part of an acid-acceptor. 50-80 wt% of the polypropylene resin and the third monomer, the acid-acceptor and the crosslinking agent I are mixed as a main material, the remaining polypropylene resin and the branching accelerator, the antioxidant and the crosslinking agent II are mixed as an auxiliary material, and the product is obtained through different thermal and chemical reaction processes.

Accordingly, the object of the present invention is to provide a high melt strength polypropylene having improved formability, i.e. high melt strength and/or melting extensibility, low gel content and low amount of oligomers.

The finding of the present invention is to provide a high melt strength polypropylene having a certain amount of short branches resulting from the integration of 1-hexene in the polymer chain. Preferably, said high melt strength polypropylene also has a certain amount of 2,1-misinsertions.

Accordingly, the present invention is directed to a high melt strength polypropylene (HMS-PP) having

(a) an 1-hexene content, based on the high melt strength polypropylene (HMS-PP), in the range of 0.5 to 5.0 mol-% determined by $^{13}$C-NMR spectroscopy, and
(b) an ethylene content, based on the high melt strength polypropylene (HMS-PP), in the range of 0 to 5.5 mol-% determined by $^{13}$C-NMR spectroscopy,
wherein further the high melt strength polypropylene (HMS-PP) has
(c) a F30 melt strength of at least 24.0 cN measured according to ISO 16790:2005 at a die pressure of 30 bar, and
(d) 2,1 regio-defects in the range of 0.01 to 0.90 % determined by $^{13}$C-NMR spectroscopy.

Preferred embodiments of the high melt strength polypropylene (HMS-PP) are defined in the claims dependent on claim 1.

The invention is further directed to the use of the high melt strength polypropylene (HMS-PP) according to the this invention for making foamed articles, as well as to foamed articles comprising, more preferably comprising at least 90 wt.-% of, the high melt strength polypropylene (HMS-PP) according to the this invention.

The invention is also directed to a process for producing the high melt strength polypropylene (HMS-PP) according to this invention comprising the following steps:

(a) polymerizing propylene and 1-hexene and optionally ethylene in the presence of a single-site catalyst system to produce a random propylene copolymer (R-PP) of propylene, 1-hexene and optionally ethylene;
(b) recovering said copolymer (R-PP);
(c) extruding said copolymer in the presence of a peroxide and bifunctionally unsaturated monomers for introducing long chain branching into said copolymer (R-PP) obtaining thereby the high melt strength polypropylene (HMS-PP), wherein the bifunctionally unsaturated monomers are selected from the group consisting of 1,3-butadiene, isoprene, dimethyl butadiene and divinylbenzene;
(d) recovering the high melt strength polypropylene (HMS-PP).

Further preferred embodiments of the process for producing the high melt strength polypropylene (HMS-PP) according to this invention are described in the claims dependent on process claim 16.

In the following, the invention is described in more detail.

The term "high melt strength polypropylene" (commonly abbreviated as HMS-PP) is a standing term for a polypropylene bearing long chain branches obtained by post-reactor treatment of a polypropylene with peroxide and

bifunctionally unsaturated monomers. Accordingly, the term "high melt strength polypropylene" according to this invention is understood as a polypropylene bearing long-chain branches originating from bifunctionally unsaturated monomers. As explained in more detail below, the high melt strength polypropylene (HMS-PP) according to this invention is a random propylene copolymer bearing long-chain branches originating from bifunctionally unsaturated monomers. Still more preferably the high melt strength polypropylene (HMS-PP) according to this invention is a random propylene copolymer of propylene, 1-hexene and optionally ethylene and bearing long-chain branches originating from bifunctionally unsaturated monomers selected from the group consisting of 1,3-butadiene, isoprene, dimethyl butadiene and divinylbenzene. The most preferred bifunctionally unsaturated monomer is 1,3-butadiene.

According to the present invention the term "bifunctionally unsaturated monomer" is understood as a monomer selected from the group consisting of 1,3-butadiene, isoprene, dimethyl butadiene and divinylbenzene. The most preferred "bifunctionally unsaturated monomer" is 1,3-butadiene.

Further, for the avoidance of doubt, the high melt strength polypropylene (HMS-PP) as well as the random propylene copolymer (R-PP) according to this invention are monophasic, i.e. do not comprise a matrix in which a rubber phase is dispersed in form of inclusions. A polymer containing a rubber phase as insertions of a second phase would by contrast be called a heterophasic copolymer and is not part of the present invention. The presence of second phases or the so-called inclusions are for instance visible by high resolution microscopy, like electron microscopy or atomic force microscopy, or by dynamic mechanical thermal analysis (DMTA). Specifically in DMTA, the presence of a multiphase structure can be identified by the presence of at least two distinct glass transition temperatures.

Accordingly, the high melt strength polypropylene (HMS-PP) according to this invention has

(a) a 1-hexene content, based on the high melt strength polypropylene (HMS-PP), in the range of 0.5 to 5.0 mol-%, preferably in the range of 0.8 to 4.0 mol-%, more preferably in the range of 1.0 to 3.0 mol.-%, determined by $^{13}$C-NMR spectroscopy, and
(b) an ethylene content, based on the high melt strength polypropylene (HMS-PP), in the range of 0.0 to 5.5 mol-%, preferably in the range of 0.5 to 5.5 mol-%, more preferably in the range of 1.0 to 4.5 mol.-%, determined by $^{13}$C-NMR spectroscopy.

More preferably, the high melt strength polypropylene (HMS-PP) according to this invention has

(a) a 1-hexene content, based on the high melt strength polypropylene (HMS-PP), in the range of 0.5 to 5.0 mol-%, preferably in the range of 0.8 to 4.0 mol-%, more preferably in the range of 1.0 to 3.0 mol.-%, determined by $^{13}$C-NMR spectroscopy, and
(b) an ethylene content, based on the high melt strength polypropylene (HMS-PP), in the range of 0.0 to 5.5 mol-%, preferably in the range of 0.5 to 5.5 mol-%, more preferably in the range of 1.0 to 4.5 mol.-%, determined by $^{13}$C-NMR spectroscopy,

wherein further the high melt strength polypropylene (HMS-PP) bears long-chain branches originating from the reaction with bifunctionally unsaturated monomers, especially with 1,3-butadiene.

As a result of the long-chain branches of the high melt strength polypropylene (HMS-PP), said high melt strength polypropylene (HMS-PP) has an enhanced melt strength. Accordingly the the high melt strength polypropylene (HMS-PP) according to this invention has an F30 melt strength of at least 24 cN, preferably in the range of 25.0 to 60.0 cN, more preferably in the range of 26.0 to 50.0 cN, measured according to ISO 16790:2005 at a die pressure of 30 bar.

Therefore, in a preferred embodiment the present invention is directed to a high melt strength polypropylene (HMS-PP) having

(a) a 1-hexene content, based on the high melt strength polypropylene (HMS-PP), in the range of 0.8 to 4.0 mol-%, preferably in the range of 1.0 to 3.0 mol.-%, determined by $^{13}$C-NMR spectroscopy, and
(b) an ethylene content, based on the high melt strength polypropylene (HMS-PP), in the range of 0.5 to 5.5 mol-%, preferably in the range of 1.0 to 4.5 mol.-%, determined by $^{13}$C-NMR spectroscopy,
wherein further the high melt strength polypropylene (HMS-PP) has
(c) an F30 melt strength in the range of 25.0 to 60.0 cN, preferably in the range of 26.0 to 50.0 cN, measured according to ISO 16790:2005 at a die pressure of 30 bar,

preferably wherein further the high melt strength polypropylene (HMS-PP) bears long-chain branches originating from the reaction with bifunctionally unsaturated monomers, especially with 1,3-butadiene.

Accordingly in a specific preferred embodiment of the present invention the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,

preferably wherein still further the high melt strength polypropylene (HMS-PP) bears long-chain branches originating from the reaction with bifunctionally unsaturated monomers, especially with 1,3-butadiene.

The high melt strength polypropylene (HMS-PP) has not only a rather high melt strength but also a rather high melt extensibility. Accordingly, it is preferred that the high melt strength polypropylene (HMS-PP) has a V30 melting extensibility of at least 245 mm/s, preferably in the range of 245 to 350 mm/s, more preferably in the range of 248 to 300 mm/s, like in the range of 250 to 280 mm/s, measured according to ISO 16790:2005 at a die pressure of 30 bar.

Therefore, in a preferred embodiment the present invention is directed to a high melt strength polypropylene (HMS-PP) having

(a) a 1-hexene content, based on the high melt strength polypropylene (HMS-PP), in the range of 0.8 to 4.0 mol-%, preferably in the range of 1.0 to 3.0 mol.-%, determined by $^{13}C$-NMR spectroscopy, and
(b) an ethylene content, based on the high melt strength polypropylene (HMS-PP), in the range of 0.5 to 5.5 mol-%, preferably in the range of 1.0 to 4.5 mol.-%, determined by $^{13}C$-NMR spectroscopy,
wherein further the high melt strength polypropylene (HMS-PP) has
(c) an F30 melt strength in the range of 25.0 to 60.0 cN, preferably in the range of 26.0 to 50.0 cN, measured according to ISO 16790:2005 at a die pressure of 30 bar, and
(d) a V30 melting extensibility in the range of 245 to 350 mm/s, preferably in the range of 248 to 300 mm/s, measured according to ISO 16790:2005 at a die pressure of 30 bar,

preferably wherein still further the high melt strength polypropylene (HMS-PP) bears long-chain branches originating from reaction with bifunctionally unsaturated monomers, especially with 1,3-butadiene.

Accordingly, in a specific preferred embodiment of the present invention the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a V30 melting extensibility in the range of 248 to 350 mm/s measured according to ISO 16790:2005 at a die pressure of 30 bar,

preferably wherein still further the high melt strength polypropylene (HMS-PP) bears long-chain branches originating from the reaction with bifunctionally unsaturated monomers, especially with 1,3-butadiene.

A further advantage of the present invention is that the high melt strength polypropylene (HMS-PP) has a xylene hot insoluble (XHU) fraction in an amount of not more than 0.20 wt.-%, preferably in an amount in the range of 0.01 to 0.20 wt.-%, still more preferably in the range of 0.03 to 0.15 wt.- %, measured according to DIN EN 579.

It is therefore preferred that the high melt strength polypropylene (HMS-PP) according to this invention has

(a) a 1-hexene content, based on the high melt strength polypropylene (HMS-PP), in the range of 0.8 to 4.0 mol-%, preferably in the range of 1.0 to 3.0 mol.-%, determined by $^{13}C$-NMR spectroscopy, and
(b) an ethylene content, based on the high melt strength polypropylene (HMS-PP), in the range of 0.5 to 5.5 mol-%, preferably in the range of 1.0 to 4.5 mol.-%, determined by $^{13}C$-NMR spectroscopy,
wherein further the high melt strength polypropylene (HMS-PP) has
(c) an F30 melt strength in the range of 25.0 to 60.0 cN, preferably in the range of 26.0 to 50.0 cN, measured according to ISO 16790:2005 at a die pressure of 30 bar,
(d) a xylene hot insoluble (XHU) fraction in the range of 0.01 to 0.20 wt.-%, preferably in the range of 0.03 to 0.15 wt.-%, measured according to DIN EN 579, and

(e) optionally a V30 melting extensibility in the range of 245 to 350 mm/s, preferably in the range of 248 to 300 mm/s, measured according to ISO 16790:2005 at a die pressure of 30 bar,

preferably wherein still further the high melt strength polypropylene (HMS-PP) bears long-chain branches originating from the reaction with bifunctionally unsaturated monomers, especially with 1,3-butadiene.

Accordingly, in a specific preferred embodiment of the present invention the high melt strength polypropylene (HMS-PP) has

(a) a 1-hexene content, based on the high melt strength polypropylene (HMS-PP), in the range of 1.0 to 3.0 mol.-% determined by $^{13}$C-NMR spectroscopy, and
(b) an ethylene content, based on the high melt strength polypropylene (HMS-PP), in the range of 1.0 to 4.5 mol.-% determined by $^{13}$C-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar, and
(d) a xylene hot insoluble (XHU) fraction in the range of 0.03 to 0.15 wt.-% measured according to DIN EN 579,

preferably wherein still further the high melt strength polypropylene (HMS-PP) bears long-chain branches originating from the reaction with bifunctionally unsaturated monomers, especially with 1,3-butadiene.

But not only the gel content of the high melt strength polypropylene (HMS-PP) shall be low but also the amount of oligomers. In other words, the high melt strength polypropylene (HMS-PP) shall have a low xylene cold soluble (XCS) content. That is, it is preferred that the high melt strength polypropylene (HMS-PP) has a xylene cold soluble (XCS) fraction in the range in the range of 0.3 to 5.0 wt.-%, more preferably in the range of 0.5 to 3.5 wt.-%, like in the range of 0.6 to 3.0 wt.-%, measured according to ISO 16152 (25 °C).

Therefore, the high melt strength polypropylene (HMS-PP) according to this invention preferably has

(a) a 1-hexene content, based on the high melt strength polypropylene (HMS-PP), in the range of 0.8 to 4.0 mol-%, preferably in the range of 1.0 to 3.0 mol.-%, determined by $^{13}$C-NMR spectroscopy, and
(b) an ethylene content, based on the high melt strength polypropylene (HMS-PP), in the range of 0.5 to 5.5 mol-%, preferably in the range of 1.0 to 4.5 mol.-%, determined by $^{13}$C-NMR spectroscopy,
wherein further the high melt strength polypropylene (HMS-PP) has
(c) an F30 melt strength in the range of 25.0 to 60.0 cN, preferably in the range of 26.0 to 50.0 cN, measured according to ISO 16790:2005 at a die pressure of 30 bar, and
(d) a xylene cold soluble (XCS) fraction in the range in the range of 0.3 to 5.0 wt.-%, more preferably in the range of 0.5 to 3.5 wt.-%, measured according to ISO 16152 (25 °C), and
(e) optionally a xylene hot insoluble (XHU) fraction in the range of 0.01 to 0.20 wt.-%, preferably in the range of 0.03 to 0.15 wt.-%, measured according to DIN EN 579,

preferably wherein still further the high melt strength polypropylene (HMS-PP) bears long-chain branches originating from the reaction with bifunctionally unsaturated monomers, especially with 1,3-butadiene.

Accordingly, in a specific preferred embodiment of the present invention the high melt strength polypropylene (HMS-PP) has

(a) a 1-hexene content, based on the high melt strength polypropylene (HMS-PP), in the range of 1.0 to 3.0 mol.-% determined by $^{13}$C-NMR spectroscopy, and
(b) an ethylene content, based on the high melt strength polypropylene (HMS-PP), in the range of 1.0 to 4.5 mol.-% determined by $^{13}$C-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar, and
(d) a xylene cold soluble (XCS) fraction in the range in the range of 0.5 to 3.5 wt.-% measured according to ISO 16152 (25 °C),

preferably wherein still further the high melt strength polypropylene (HMS-PP) bears long-chain branches originating from the reaction with bifunctionally unsaturated monomers, especially with 1,3-butadiene.

Yet more preferably the high melt strength polypropylene (HMS-PP) has

(a) a 1-hexene content, based on the high melt strength polypropylene (HMS-PP), in the range of 1.0 to 3.0 mol.-

% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a xylene hot insoluble (XHU) fraction in the range of 0.03 to 0.15 wt.-% measured according to DIN EN 579, and
(e) a xylene cold soluble (XCS) fraction in the range in the range of 0.5 to 3.5 wt.-% measured according to ISO 16152 (25 °C),

preferably wherein still further the high melt strength polypropylene (HMS-PP) bears long-chain branches originating from the reaction with bifunctionally unsaturated monomers, especially with 1,3-butadiene.

The rather low amounts of xylene solubles is especially reached by the use of a single-site catalyst. The use of a single-site catalyst leads typically to 2,1 regio defects in the polymer chain. The high melt strength polypropylene (HMS-PP) according to this invention has 2,1 regio-defects in the range of 0.01 to 0.90 %, more preferably in the range of 0.10 to 0.50 %, determined by $^{13}C$-NMR spectroscopy.

Therefore, the high melt strength polypropylene (HMS-PP) according to this invention preferably has

(a) a 1-hexene content, based on the high melt strength polypropylene (HMS-PP), in the range of 0.8 to 4.0 mol-%, preferably in the range of 1.0 to 3.0 mol.-%, determined by $^{13}C$-NMR spectroscopy, and
(b) an ethylene content, based on the high melt strength polypropylene (HMS-PP), in the range of 0.5 to 5.5 mol-%, preferably in the range of 1.0 to 4.5 mol.-%, determined by $^{13}C$-NMR spectroscopy,
wherein further the high melt strength polypropylene (HMS-PP) has
(c) an F30 melt strength in the range of 25.0 to 60.0 cN, preferably in the range of 26.0 to 50.0 cN, measured according to ISO 16790:2005 at a die pressure of 30 bar,
(d) 2,1 regio-defects in the range of 0.01 to 0.90 %, more preferably in the range of 0.10 to 0.50 %, determined by $^{13}C$-NMR spectroscopy,
(e) optionally a xylene hot insoluble (XHU) fraction in the range of 0.01 to 0.20 wt.-%, preferably in the range of 0.03 to 0.15 wt.-%, measured according to DIN EN 579,

preferably wherein still further the high melt strength polypropylene (HMS-PP) bears long-chain branches originating from the reaction with bifunctionally unsaturated monomers, especially with 1,3-butadiene.

Still more preferably, the high melt strength polypropylene (HMS-PP) according to this invention preferably has

(a) a 1-hexene content, based on the high melt strength polypropylene (HMS-PP), in the range of 0.8 to 4.0 mol-%, preferably in the range of 1.0 to 3.0 mol.-%, determined by $^{13}C$-NMR spectroscopy, and
(b) an ethylene content, based on the high melt strength polypropylene (HMS-PP), in the range of 0.5 to 5.5 mol-%, preferably in the range of 1.0 to 4.5 mol.-%, determined by $^{13}C$-NMR spectroscopy,
wherein further the high melt strength polypropylene (HMS-PP) has
(c) an F30 melt strength in the range of 25.0 to 60.0 cN, preferably in the range of 26.0 to 50.0 cN, measured according to ISO 16790:2005 at a die pressure of 30 bar,
(d) 2,1 regio-defects in the range of 0.01 to 0.90 %, more preferably in the range of 0.10 to 0.50 %, determined by $^{13}C$-NMR spectroscopy,
(e) a xylene hot insoluble (XHU) fraction in the range of 0.01 to 0.20 wt.-%, preferably in the range of 0.03 to 0.15 wt.-%, measured according to DIN EN 579, and
(f) optionally a xylene cold soluble (XCS) fraction in the range in the range of 0.3 to 5.0 wt.-% measured according to ISO 16152 (25 °C),

preferably wherein still further the high melt strength polypropylene (HMS-PP) bears long-chain branches originating from the reaction with bifunctionally unsaturated monomers, especially with 1,3-butadiene.

Hence in a specific embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure

of 30 bar,

(d) 2,1 regio-defects in the range of 0.10 to 0.50 %, determined by $^{13}C$-NMR spectroscopy, and

(e) a xylene hot insoluble (XHU) fraction in the range of 0.03 to 0.15 wt.-% measured according to DIN EN 579,

preferably wherein still further the high melt strength polypropylene (HMS-PP) bears long-chain branches originating from the reaction with bifunctionally unsaturated monomers, especially with 1,3-butadiene.

In still another preferred embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and

(b) an ethylene content, based on the high melt strength polypropylene (HMS-PP), in the range of 1.0 to 4.5 mol.-% determined by $^{13}C$-NMR spectroscopy,

wherein further the high melt strength polypropylene (HMS-PP) has

(c) a F30 melt strength in the range of 26.0 to 50.0 cN measured according to ISO 16790:2005 at a die pressure of 30 bar,

(d) 2,1 regio-defects in the range of 0.10 to 0.50 %, determined by $^{13}C$-NMR spectroscopy,

(e) a xylene hot insoluble (XHU) fraction in the range of 0.03 to 0.15 wt.-% measured according to DIN EN 579, and

(f) a xylene cold soluble (XCS) fraction in the range in the range of 0.5 to 3.5 wt.-% measured according to ISO 16152 (25 °C),

preferably wherein still further the high melt strength polypropylene (HMS-PP) bears long-chain branches originating from the reaction with bifunctionally unsaturated monomers, especially with 1,3-butadiene.

The high melt strength polypropylene (HMS-PP) according to this invention shall be especially used for foamed articles. Accordingly, it is preferred that the high melt strength polypropylene (HMS-PP) has a melt flow rate $MFR_2$ (230 °C, 2.16 kg) measured according to ISO 1133 in the range of 0.5 to 4.0 g/10min, more preferably in the range of 0.8 to 3.5 g/10min.

Therefore, the high melt strength polypropylene (HMS-PP) according to this invention preferably has

(a) a 1-hexene content, based on the high melt strength polypropylene (HMS-PP), in the range of 0.8 to 4.0 mol-%, preferably in the range of 1.0 to 3.0 mol.-%, determined by $^{13}C$-NMR spectroscopy, and

(b) an ethylene content, based on the high melt strength polypropylene (HMS-PP), in the range of 0.5 to 5.5 mol-%, preferably in the range of 1.0 to 4.5 mol.-%, determined by $^{13}C$-NMR spectroscopy,

wherein further the high melt strength polypropylene (HMS-PP) has

(c) an F30 melt strength in the range of 25.0 to 60.0 cN, preferably in the range of 26.0 to 50.0 cN, measured according to ISO 16790:2005 at a die pressure of 30 bar,

(d) a melt flow rate $MFR_2$ (230 °C, 2.16 kg) measured according to ISO 1133 in the range of 0.5 to 4.0 g/10min, and

(e) optionally a xylene hot insoluble (XHU) fraction in the range of 0.01 to 0.20 wt.-%, preferably in the range of 0.03 to 0.15 wt.-%, measured according to DIN EN 579,

preferably wherein still further the high melt strength polypropylene (HMS-PP) bears long-chain branches originating from the reaction with bifunctionally unsaturated monomers, especially with 1,3-butadiene.

Still more preferably the high melt strength polypropylene (HMS-PP) according to this invention preferably has

(a) a 1-hexene content, based on the high melt strength polypropylene (HMS-PP), in the range of 0.8 to 4.0 mol-%, preferably in the range of 1.0 to 3.0 mol.-%, determined by $^{13}C$-NMR spectroscopy, and

(b) an ethylene content, based on the high melt strength polypropylene (HMS-PP), in the range of 0.5 to 5.5 mol-%, preferably in the range of 1.0 to 4.5 mol.-%, determined by $^{13}C$-NMR spectroscopy,

wherein further the high melt strength polypropylene (HMS-PP) has

(c) an F30 melt strength in the range of 25.0 to 60.0 cN, preferably in the range of 26.0 to 50.0 cN, measured according to ISO 16790:2005 at a die pressure of 30 bar,

(d) a melt flow rate $MFR_2$ (230 °C, 2.16 kg) measured according to ISO 1133 in the range of 0.5 to 4.0 g/10min,

(e) a xylene hot insoluble (XHU) fraction in the range of 0.01 to 0.20 wt.-%, preferably in the range of 0.03 to 0.15 wt.-%, measured according to DIN EN 579, and

(f) optionally a xylene cold soluble (XCS) fraction in the range in the range of 0.3 to 5.0 measured according to ISO 16152 (25 °C),

preferably wherein still further the high melt strength polypropylene (HMS-PP) bears long-chain branches originating from the reaction with bifunctionally unsaturated monomers, especially with 1,3-butadiene.

Hence in a specific embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min, and
(e) a xylene hot insoluble (XHU) fraction in the range of 0.03 to 0.15 wt.-% measured according to DIN EN 579,

preferably wherein still further the high melt strength polypropylene (HMS-PP) bears long-chain branches originating from the reaction with bifunctionally unsaturated monomers, especially with 1,3-butadiene.

In still another preferred embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) 2,1 regio-defects in the range of 0.10 to 0.50 %, determined by $^{13}C$-NMR spectroscopy, and
(f) a xylene hot insoluble (XHU) fraction in the range of 0.03 to 0.15 wt.-% measured according to DIN EN 579,

preferably wherein still further the high melt strength polypropylene (HMS-PP) bears long-chain branches originating from the reaction with bifunctionally unsaturated monomers, especially with 1,3-butadiene.

In still yet another preferred embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) 2,1 regio-defects in the range of 0.10 to 0.50 %, determined by $^{13}C$-NMR spectroscopy,
(f) a xylene hot insoluble (XHU) fraction in the range of 0.03 to 0.15 wt.-% measured according to DIN EN 579, and
(g) a xylene cold soluble (XCS) fraction in the range in the range of 0.5 to 3.5 wt.-% measured according to ISO 16152 (25 °C),

preferably wherein still further the high melt strength polypropylene (HMS-PP) bears long-chain branches originating from the reaction with bifunctionally unsaturated monomers, especially with 1,3-butadiene.

The high melt strength polypropylene (HMS-PP) is further characterized by it melting and/or crystallizing behaviour. Accordingly it is preferred that the high melt strength polypropylene (HMS-PP) has

(a) a melting temperature Tm in the range of 130 to 150°C, more preferably in the range of 133 to 145 °C, like in the range of 135 to 142 °C, measured by DSC according to ISO 11357-3 (heating and cooling rate 10°C/min) and
(b) optionally a crystallization temperature Tc in the range of 92 to 112°C, more preferably in the range of 95 to 110 °C, like in the range of 97 to 110 °C, measured by DSC according to ISO 11357-3 (heating and cooling rate 10°C/min).

Therefore, in a further preferred embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and

(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) a melting temperature Tm in the range of 133 to 145°C measured by DSC according to ISO 11357-3 (heating and cooling rate 10°C/min),
(f) a xylene hot insoluble (XHU) fraction in the range of 0.03 to 0.15 wt.-% measured according to DIN EN 579, and
(g) a xylene cold soluble (XCS) fraction in the range in the range of 0.5 to 3.5 wt.-% measured according to ISO 16152 (25 °C),

preferably wherein still further the high melt strength polypropylene (HMS-PP) bears long-chain branches originating from the reaction with bifunctionally unsaturated monomers, especially with 1,3-butadiene.
In another preferred embodiment the high melt strength polypropylene (HMS-PP) has

(a) an 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) a F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) a melting temperature Tm in the range of 133 to 145°C measured by DSC according to ISO 11357-3 (heating and cooling rate 10°C/min),
(f) 2,1 regio-defects in the range of 0.1 to 0.50 %, determined by $^{13}C$-NMR spectroscopy,
(g) a xylene hot insoluble (XHU) fraction in the range of 0.03 to 0.15 wt.-% measured according to DIN EN 579, and
(h) a xylene cold soluble (XCS) fraction in the range in the range of 0.5 to 3.5 wt.-% measured according to ISO 16152 (25 °C),

preferably wherein still further the high melt strength polypropylene (HMS-PP) bears long-chain branches originating from the reaction with bifunctionally unsaturated monomers, especially with 1,3-butadiene.
As mentioned above the high melt strength polypropylene (HMS-PP) according to this invention is obtained by post-reactor treatment, i.e. by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene. Accordingly the high melt strength polypropylene (HMS-PP) according to this invention is obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has

(a) a 1-hexene content in the range of 0.5 to 5.0 mol-%, based on the random propylene copolymer (R-PP), determined by $^{13}C$-NMR spectroscopy, and
(b) an ethylene content in the range of 0 to 5.5 mol-%, based on the random propylene copolymer (R-PP), determined by $^{13}C$-NMR spectroscopy.-%.

It is especially preferred that the high melt strength polypropylene (HMS-PP) according to this invention is obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has

(a) a 1-hexene content, based on the random propylene copolymer (R-PP), in the range of 0.8 to 4.0 mol-%, preferably in the range of 1.0 to 3.0 mol.-%, determined by $^{13}C$-NMR spectroscopy,
(b) an ethylene content, based on the random propylene copolymer (R-PP), in the range of 0.5 to 5.5 mol-%, preferably in the range of 1.0 to 4.5 mol.-%, determined by $^{13}C$-NMR spectroscopy, and
(c) optionally 2,1 regio-defects in the range of 0.10 to 0.50 %, determined by $^{13}C$-NMR spectroscopy.

Therefore, in a preferred embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar, and
(d) optionally a xylene hot insoluble (XHU) fraction in the range of 0.03 to 0.15 wt.-% measured according to DIN EN 579
wherein further the high melt strength polypropylene has been obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has
(e) a 1-hexene content, based on the random propylene copolymer (R-PP), in the range of in the range of 1.0 to 3.0 mol.-% determined by $^{13}C$-NMR spectroscopy, and
(f) an ethylene content, based on the random propylene copolymer (R-PP), in the range of 1.0 to 4.5 mol.-%, determined by $^{13}C$-NMR spectroscopy.

In another preferred embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) and a xylene hot insoluble (XHU) fraction in the range of 0.03 to 0.15 wt.-% measured according to DIN EN 579,
(e) optionally a xylene cold soluble (XCS) fraction in the range in the range of 0.5 to 3.5 wt.-% measured according to ISO 16152 (25 °C),
wherein further the high melt strength polypropylene has been obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has
(f) a 1-hexene content, based on the random propylene copolymer (R-PP), in the range of in the range of 1.0 to 3.0 mol.-% determined by $^{13}C$-NMR spectroscopy, and
(g) an ethylene content, based on the random propylene copolymer (R-PP), in the range of 1.0 to 4.5 mol.-%, determined by $^{13}C$-NMR spectroscopy.

In still another preferred embodiment the high melt strength polypropylene (HMS-PP) has

(a) a 1-hexene content, based on the high melt strength polypropylene (HMS-PP), in the range of 1.0 to 3.0 mol.-% determined by $^{13}C$-NMR spectroscopy, and
(b) an ethylene content, based on the high melt strength polypropylene (HMS-PP), in the range of 1.0 to 4.5 mol.-% determined by $^{13}C$-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) a xylene hot insoluble (XHU) fraction in the range of 0.03 to 0.15 wt.-% measured according to DIN EN 579, and
(f) optionally a xylene cold soluble (XCS) fraction in the range in the range of 0.5 to 3.5 wt.-% measured according to ISO 16152 (25 °C),
wherein further the high melt strength polypropylene has been obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has
(g) a 1-hexene content, based on the random propylene copolymer (R-PP), in the range of in the range of 1.0 to 3.0 mol.-% determined by $^{13}C$-NMR spectroscopy, and

(h) an ethylene content, based on the random propylene copolymer (R-PP), in the range of 1.0 to 4.5 mol.-%, determined by $^{13}$C-NMR spectroscopy.

In still yet another preferred embodiment the high melt strength polypropylene (HMS-PP) has

(a) a 1-hexene content, based on the high melt strength polypropylene (HMS-PP), in the range of 1.0 to 3.0 mol.-% determined by $^{13}$C-NMR spectroscopy, and
(b) an ethylene content, based on the high melt strength polypropylene (HMS-PP), in the range of 1.0 to 4.5 mol.-% determined by $^{13}$C-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) 2,1 regio-defects in the range of 0.10 to 0.50 %, determined by $^{13}$C-NMR spectroscopy,
(f) a xylene hot insoluble (XHU) fraction in the range of 0.03 to 0.15 wt.-% measured according to DIN EN 579, and
(g) optionally a xylene cold soluble (XCS) fraction in the range in the range of 0.5 to 3.5 wt.-% measured according to ISO 16152 (25 °C),
wherein further the high melt strength polypropylene has been obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has
(h) a 1-hexene content, based on the random propylene copolymer (R-PP), in the range of in the range of 1.0 to 3.0 mol.-% determined by $^{13}$C-NMR spectroscopy, and
(i) an ethylene content, based on the random propylene copolymer (R-PP), in the range of 1.0 to 4.5 mol.-%, determined by $^{13}$C-NMR spectroscopy.

The random propylene copolymer (R-PP) used for the manufacture of the high melt strength polypropylene (HMS-PP) preferably comprises a first propylene polymer fraction (PP-1) and a second propylene polymer fraction (PP-2), wherein

(a) the weight ratio between the first propylene polymer fraction (PP-1) and the second propylene polymer fraction (PP-2) [PP-1/PP-2] is in the range of 50/50 to 70/30 wt.-%, and
(b) the total amount of the first propylene polymer fraction (PP-1) and the second propylene polymer fraction (PP-2), based on the total amount of the random propylene copolymer (R-PP), is at least 90 wt.-%.

More preferably the random propylene copolymer (R-PP) used for the manufacture of the high melt strength polypropylene (HMS-PP) comprises a first propylene polymer fraction (PP-1) and a second propylene polymer fraction (PP-2),
wherein

(a) the weight ratio between the first propylene polymer fraction (PP-1) and the second propylene polymer fraction (PP-2) [PP-1/PP-2] is in the range of 50/50 to 70/30 wt.-%, and
(b) the total amount of the first propylene polymer fraction (PP-1) and the second propylene polymer fraction (PP-2), based on the total amount of the random propylene copolymer (R-PP), is at least 90 wt.-%,
and wherein still further
(c) the first propylene polymer fraction (PP-1) has

(i) a 1-hexene content, based on the first propylene polymer fraction (PP-1), in the range of 0.2 to 3.0 mol-% determined by $^{13}$C-NMR spectroscopy, and
(ii) an ethylene content, based on the first propylene polymer fraction (PP-1), in the range of 0.0 to 5.0 mol-% determined by $^{13}$C-NMR spectroscopy.

(d) the second propylene polymer fraction (PP-2) has

(i) a 1-hexene content, based on the second propylene polymer fraction (PP-2), in the range of 1.5 to 6.0 mol-%, determined by $^{13}$C-NMR spectroscopy and
(ii) an ethylene content, based on the second propylene polymer fraction (PP-2), in the range of 0.0 to 12.0 mol-% determined by $^{13}$C-NMR spectroscopy,

preferably with the proviso that

(e) the 1-hexene content in the second propylene polymer fraction (PP-2) is by at least 0.5 mol-%, like 0.5 to 3.5 mol-%, than in the first propylene polymer fraction (PP-1), and

(f) in case the random propylene copolymer (R-PP) contain ethylene, that the ethylene content in the second propylene polymer fraction (PP-2) is by at least 2.0 mol-%, like 2.0 to 12.0 mol-%, than in the first propylene polymer fraction (PP-1).

Still more preferably the random propylene copolymer (R-PP) used for the manufacture of the high melt strength polypropylene (HMS-PP) preferably comprises a first propylene polymer fraction (PP-1) being copolymer of propylene and 1-hexene and a second propylene polymer fraction (PP-2) being a terpolymer of propylene, 1-hexene and ethylene, wherein

(a) the weight ratio between the first propylene polymer fraction (PP-1) and the second propylene polymer fraction (PP-2) [PP-1/PP-2] is in the range of 50/50 to 70/30 wt.-%, and

(b) the total amount of the first propylene polymer fraction (PP-1) and the second propylene polymer fraction (PP-2), based on the total amount of the random propylene copolymer (R-PP), is at least 90 wt.-%,

and optionally wherein still further

(c) the first propylene polymer fraction (PP-1) has a 1-hexene content, based on the first propylene polymer fraction (PP-1), in the range of 0.2 to 3.0 mol-% determined by $^{13}$C-NMR spectroscopy,

(d) the second propylene polymer fraction (PP-2) has a 1-hexene content, based on the second propylene polymer fraction (PP-2), in the range of 1.5 to 5.0 mol-%, determined by $^{13}$C-NMR spectroscopy and an ethylene content, based on the second propylene polymer fraction (PP-2), in the range of 4.5 to 12.0 mol-% determined by $^{13}$C-NMR spectroscopy.

Still yet more preferably the random propylene copolymer (R-PP) used for the manufacture of the high melt strength polypropylene (HMS-PP) preferably comprises a first propylene polymer fraction (PP-1) being copolymer of propylene and 1-hexene and a second propylene polymer fraction (PP-2) being a terpolymer of propylene, 1-hexene and ethylene,
wherein

(e) the weight ratio between the first propylene polymer fraction (PP-1) and the second propylene polymer fraction (PP-2) [PP-1/PP-2] is in the range of 50/50 to 70/30 wt.-%, and

(f) the total amount of the first propylene polymer fraction (PP-1) and the second propylene polymer fraction (PP-2), based on the total amount of the random propylene copolymer (R-PP), is at least 90 wt.-%,

and wherein still further

(g) the first propylene polymer fraction (PP-1) has a 1-hexene content, based on the first propylene polymer fraction (PP-1), in the range of 0.2 to 3.0 mol-% determined by $^{13}$C-NMR spectroscopy, and

(h) the second propylene polymer fraction (PP-2) has a 1-hexene content, based on the second propylene polymer fraction (PP-2), in the range of 1.5 to 5.0 mol-%, determined by $^{13}$C-NMR spectroscopy and an ethylene content, based on the second propylene polymer fraction (PP-2), in the range of 4.5 to 12.0 mol-% determined by $^{13}$C-NMR spectroscopy,

preferably with the proviso that

(g) the 1-hexene content in the second propylene polymer fraction (PP-2) is by at least 0.5 mol-%, like 0.5 to 3.5 mol-%, than in the first propylene polymer fraction (PP-1).

Thus in a preferred embodiment of this invention the high melt strength polypropylene (HMS-PP) has

(a) a 1-hexene content, based on the high melt strength polypropylene (HMS-PP), in the range of 1.0 to 3.0 mol.-% determined by $^{13}$C-NMR spectroscopy, and

(b) an ethylene content, based on the high melt strength polypropylene (HMS-PP), in the range of 1.0 to 4.5 mol.-% determined by $^{13}$C-NMR spectroscopy,

wherein further the high melt strength polypropylene (HMS-PP) has

(c) an F30 melt strength in the range of 26.0 to 50.0 cN measured according to ISO 16790:2005 at a die pressure of 30 bar, and

(d) optionally a xylene hot insoluble (XHU) fraction in the range of 0.03 to 0.15 wt.-% measured according to DIN EN 579

wherein further the high melt strength polypropylene has been obtained by treating a random propylene copolymer (R-PP) with peroxide and bifunctionally unsaturated monomers selected from the group consisting of 1,3-butadiene,

isoprene, dimethyl butadiene and divinylbenzene, especially with peroxide and 1,3-butadiene, wherein the random propylene copolymer (R-PP) has

(e) a 1-hexene content, based on the random propylene copolymer (R-PP), in the range of in the range of 1.0 to 3.0 mol.-% determined by $^{13}$C-NMR spectroscopy, and

(f) an ethylene content, based on the random propylene copolymer (R-PP), in the range of 1.0 to 4.5 mol.-%, determined by $^{13}$C-NMR spectroscopy,

and wherein still further

the random propylene copolymer (R-PP) comprises a first propylene polymer fraction (PP-1) and a second propylene polymer fraction (PP-2), wherein

(g) the weight ratio between the first propylene polymer fraction (PP-1) and the second propylene polymer fraction (PP-2) [PP-1/PP-2] is in the range of 50/50 to 70/30 wt.-%, and

(h) the total amount of the first propylene polymer fraction (PP-1) and the second propylene polymer fraction (PP-2), based on the total amount of the random propylene copolymer (R-PP), is at least 90 wt.-%,

and wherein still further

(i) the first propylene polymer fraction (PP-1) has a 1-hexene content, based on the first propylene polymer fraction (PP-1), in the range of 0.2 to 3.0 mol-% determined by $^{13}$C-NMR spectroscopy, and an ethylene content, based on the first propylene polymer fraction (PP-1), in the range of 0.0 to 5.0 mol-% determined by $^{13}$C-NMR spectroscopy, and

(j) the second propylene polymer fraction (PP-2) has a 1-hexene content, based on the second propylene polymer fraction (PP-2), in the range of 1.5 to 6.0 mol-%, determined by $^{13}$C-NMR spectroscopy and an ethylene content, based on the second propylene polymer fraction (PP-2), in the range of 0.0 to 12.0 mol-% determined by $^{13}$C-NMR spectroscopy,

preferably with the proviso that

(k) the 1-hexene content in the second propylene polymer fraction (PP-2) is by at least 0.5 mol-%, like 0.5 to 3.5 mol-%, than in the first propylene polymer fraction (PP-1), and

(l) in case the random propylene copolymer (R-PP) contain ethylene, that the ethylene content in the second propylene polymer fraction (PP-2) is by at least 2.0 mol-%, like 2.0 to 12.0 mol-%, than in the first propylene polymer fraction (PP-1).

Thus in a still more preferred embodiment of this invention the high melt strength polypropylene (HMS-PP) has

(a) a 1-hexene content, based on the high melt strength polypropylene (HMS-PP), in the range of 1.0 to 3.0 mol.-% determined by $^{13}$C-NMR spectroscopy, and

(b) an ethylene content, based on the high melt strength polypropylene (HMS-PP), in the range of 1.0 to 4.5 mol.-% determined by $^{13}$C-NMR spectroscopy,

wherein further the high melt strength polypropylene (HMS-PP) has

(c) an F30 melt strength in the range of 26.0 to 50.0 cN measured according to ISO 16790:2005 at a die pressure of 30 bar,

(d) a melt flow rate $MFR_2$ (230 °C, 2.16 kg) measured according to ISO 1133 in the range of 0.5 to 4.0 g/10min,

(e) 2,1 regio-defects in the range of 0.10 to 0.50 %, determined by $^{13}$C-NMR spectroscopy,

(f) a xylene hot insoluble (XHU) fraction in the range of 0.03 to 0.15 wt.-% measured according to DIN EN 579, and

(g) a xylene cold soluble (XCS) fraction in the range in the range of 0.5 to 3.5 wt.-% measured according to ISO 16152 (25 °C),

wherein further the high melt strength polypropylene (HMS-PP) has been obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has

(m) a 1-hexene content, based on the random propylene copolymer (R-PP), in the range of in the range of 1.0 to 3.0 mol-% determined by $^{13}$C-NMR spectroscopy, and

(n) an ethylene content, based on the random propylene copolymer (R-PP), in the range of 1.0 to 4.5 mol-%, determined by $^{13}$C-NMR spectroscopy,

and wherein still further

the random propylene copolymer (R-PP) comprises a first propylene polymer fraction (PP-1) and a second propylene polymer fraction (PP-2),

wherein
(o) the weight ratio between the first propylene polymer fraction (PP-1) and the second propylene polymer fraction (PP-2) [PP-1/PP-2] is in the range of 50/50 to 70/30 wt.-%, and
(p) the total amount of the first propylene polymer fraction (PP-1) and the second propylene polymer fraction (PP-2), based on the total amount of the random propylene copolymer (R-PP), is at least 90 wt.-%,
and wherein still further
(q) the first propylene polymer fraction (PP-1) has a 1-hexene content, based on the first propylene polymer fraction (PP-1), in the range of 0.2 to 3.0 mol-% determined by $^{13}$C-NMR spectroscopy, and an ethylene content, based on the first propylene polymer fraction (PP-1), in the range of 0.0 to 5.0 mol-% determined by $^{13}$C-NMR spectroscopy, and
(r) the second propylene polymer fraction (PP-2) has a 1-hexene content, based on the second propylene polymer fraction (PP-2), in the range of 1.5 to 6.0 mol-%, determined by $^{13}$C-NMR spectroscopy and an ethylene content, based on the second propylene polymer fraction (PP-2), in the range of 0.0 to 12.0 mol-% determined by $^{13}$C-NMR spectroscopy,
preferably with the proviso that
(s) the 1-hexene content in the second propylene polymer fraction (PP-2) is by at least 0.5 mol-%, like 0.5 to 3.5 mol-%, than in the first propylene polymer fraction (PP-1), and
(t) in case the random propylene copolymer (R-PP) contain ethylene, that the ethylene content in the second propylene polymer fraction (PP-2) is by at least 2.0 mol-%, like 2.0 to 12.0 mol-%, than in the first propylene polymer fraction (PP-1).

In another preferred embodiment of this invention the high melt strength polypropylene (HMS-PP) has

(a) a 1-hexene content, based on the high melt strength polypropylene (HMS-PP), in the range of 1.0 to 3.0 mol.-% determined by $^{13}$C-NMR spectroscopy, and
(b) an ethylene content, based on the high melt strength polypropylene (HMS-PP), in the range of 1.0 to 4.5 mol.-% determined by $^{13}$C-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar, and
(d) a xylene hot insoluble (XHU) fraction in the range of 0.03 to 0.15 wt.-% measured according to DIN EN 579,
wherein further the high melt strength polypropylene (HMS-PP) has been obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has
(e) a 1-hexene content, based on the random propylene copolymer (R-PP), in the range of in the range of 1.0 to 3.0 mol.-% determined by $^{13}$C-NMR spectroscopy, and
(f) an ethylene content, based on the random propylene copolymer (R-PP), in the range of 1.0 to 4.5 mol.-%, determined by $^{13}$C-NMR spectroscopy,
and wherein still further

the random propylene copolymer (R-PP) comprises a first propylene polymer fraction (PP-1) being copolymer of propylene and 1-hexene and a second propylene polymer fraction (PP-2) being a terpolymer of propylene, 1-hexene and ethylene,
wherein

(g) the weight ratio between the first propylene polymer fraction (PP-1) and the second propylene polymer fraction (PP-2) [PP-1/PP-2] is in the range of 50/50 to 70/30 wt.-%, and
(h) the total amount of the first propylene polymer fraction (PP-1) and the second propylene polymer fraction (PP-2), based on the total amount of the random propylene copolymer (R-PP), is at least 90 wt.-%,
and wherein still further
(i) the first propylene polymer fraction (PP-1) has a 1-hexene content, based on the first propylene polymer fraction (PP-1), in the range of 0.2 to 3.0 mol-% determined by $^{13}$C-NMR spectroscopy, and
(j) the second propylene polymer fraction (PP-2) has a 1-hexene content, based on the second propylene polymer fraction (PP-2), in the range of 1.5 to 5.0 mol-%, determined by $^{13}$C-NMR spectroscopy and an ethylene content, based on the second propylene polymer fraction (PP-2), in the range of 4.5 to 12.0 mol-% determined by $^{13}$C-NMR spectroscopy,
preferably with the proviso that
(k) the 1-hexene content in the second propylene polymer fraction (PP-2) is by at least 0.5 mol-%, like 0.5 to 3.5

mol-%, than in the first propylene polymer fraction (PP-1).

In still another preferred embodiment of this invention the high melt strength polypropylene (HMS-PP) has

(a) a 1-hexene content, based on the high melt strength polypropylene (HMS-PP), in the range of 1.0 to 3.0 mol.-% determined by $^{13}$C-NMR spectroscopy, and
(b) an ethylene content, based on the high melt strength polypropylene (HMS-PP), in the range of 1.0 to 4.5 mol.-% determined by $^{13}$C-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) 2,1 regio-defects in the range of 0.10 to 0.50 %, determined by $^{13}$C-NMR spectroscopy,
(f) a xylene hot insoluble (XHU) fraction in the range of 0.03 to 0.15 wt.-% measured according to DIN EN 579, and
(g) a xylene cold soluble (XCS) fraction in the range in the range of 0.5 to 3.5 wt.-% measured according to ISO 16152 (25 °C),
wherein further the high melt strength polypropylene (HMS-PP) has been obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has
(h) a 1-hexene content, based on the random propylene copolymer (R-PP), in the range of in the range of 1.0 to 3.0 mol.-% determined by $^{13}$C-NMR spectroscopy, and
(i) an ethylene content, based on the random propylene copolymer (R-PP), in the range of 1.0 to 4.5 mol.-%, determined by $^{13}$C-NMR spectroscopy,
and wherein still further

the random propylene copolymer (R-PP) comprises a first propylene polymer fraction (PP-1) being copolymer of propylene and 1-hexene and a second propylene polymer fraction (PP-2) being a terpolymer of propylene, 1-hexene and ethylene,
wherein

(j) the weight ratio between the first propylene polymer fraction (PP-1) and the second propylene polymer fraction (PP-2) [PP-1/PP-2] is in the range of 50/50 to 70/30 wt.-%,
(k) the total amount of the first propylene polymer fraction (PP-1) and the second propylene polymer fraction (PP-2), based on the total amount of the random propylene copolymer (R-PP),
and wherein still further
(l) the first propylene polymer fraction (PP-1) has a 1-hexene content, based on the first propylene polymer fraction (PP-1), in the range of 0.2 to 3.0 mol-% determined by $^{13}$C-NMR spectroscopy, and
(m) the second propylene polymer fraction (PP-2) has a 1-hexene content, based on the second propylene polymer fraction (PP-2), in the range of 1.5 to 5.0 mol-%, determined by $^{13}$C-NMR spectroscopy and an ethylene content, based on the second propylene polymer fraction (PP-2), in the range of 4.5 to 10.0 mol-% determined by $^{13}$C-NMR spectroscopy,
preferably with the proviso that
(n) the 1-hexene content in the second propylene polymer fraction (PP-2) is by at least 0.5 mol-%, like 0.5 to 3.5 mol-%, than in the first propylene polymer fraction (PP-1).

The high melt strength polypropylene (HMS-PP) is especially obtained by the process described in more detail below.

Accordingly, the high melt strength polypropylene (HMS-PP) originates from a random propylene copolymer (R-PP) obtained in the presence of a single-site catalyst. More preferably, the random propylene copolymer (R-PP) has been produced in a sequential polymerization process.

Thus, the process for producing the high melt strength polypropylene (HMS-PP) according to this invention comprises the following steps:

(a) polymerizing propylene and 1-hexene and optionally ethylene in the presence of a single site catalyst system to produce a copolymer (R-PP) of propylene, 1-hexene and optionally ethylene;
(b) recovering said copolymer (R-PP);
(c) extruding said copolymer in the presence of a peroxide and 1,3-butadiene for introducing long chain branching

into said copolymer (R-PP) obtaining thereby the high melt strength polypropylene (HMS-PP);
(d) recovering the high melt strength polypropylene (HMS-PP).

• *Polymerization of the random propylene copolymer (R-PP)*

The random propylene copolymer (R-PP) polymerized in process step a) is a copolymer of propylene with 1-hexene and optionally ethylene. The random propylene copolymer (R-PP) is preferably a propylene 1-hexene copolymer or copolymer of propylene 1-hexene and ethylene, the latter being especially preferred.

The random propylene copolymer (R-PP) can be produced in a sequential step process, using reactors in serial configuration and operating at different reaction conditions. As a consequence, each fraction prepared in a specific reactor can have its own molecular weight distribution and/or comonomer content distribution depending on the type of propylene copolymer produced. When the distribution curves (molecular weight or comonomer content) from these fractions are superimposed to obtain the molecular weight distribution curve or the comonomer content distribution curve of the final copolymer, these curves may show two or more maxima or at least be distinctly broadened when compared to curves for the individual fractions. Such a copolymer, produced in two or more serial steps, is called bimodal or multimodal, depending on the number of steps. Accordingly the propylene copolymer may be multimodal, like bimodal, in view of the molecular weight and/or comonomer content depending on the type of propylene copolymer.

In case the random propylene copolymer (R-PP) is of multimodal, like bimodal, character, in view of the comonomer content, it is appreciated that the individual fractions are present in amounts influencing the properties of the material. It is especially preferred that the random propylene copolymer (R-PP) comprises two copolymer fractions as defined above, i.e. a first propylene polymer fraction (PP-1) and a second propylene polymer fraction (PP-2) in amounts and character as specified in detail above.

Polymerization processes, which are suitable for producing the random propylene copolymer (R-PP) are known in the state of the art and comprise at least one polymerization stage, where polymerization is typically carried out in solution, slurry, bulk or gas phase. Typically, the polymerization process comprises additional polymerization stages or reactors. In one particular embodiment, the process contains at least one bulk reactor zone and at least one gas phase reactor zone, each zone comprising at least one reactor and all reactors being arranged in cascade. In one particularly preferred embodiment the polymerization process comprises at least one bulk reactor and at least one gas phase reactor arranged in that order. The process may further comprise pre- and post-reactors. Pre-reactors comprise typically pre-polymerization reactors. In this kind of processes, the use of higher polymerization temperatures is preferred in order to achieve specific properties of the polymer. Typical temperatures in these processes are 70 °C or higher, preferably 75 °C or higher. The higher polymerization temperatures as mentioned above can be applied in some or all reactors of the reactor cascade.

A preferred multistage process is a "loop-gas phase"-process, such as developed by Borealis (known as BORSTAR® technology) described e.g. in patent literature, such as in EP 0 887 379, WO 92/12182, WO 2004/000899, WO 2004/111095, WO 99/24478, WO 99/24479 or in WO 00/68315. A further suitable slurry-gas phase process is the Spheripol® process of Basell.

Suitably a specific type of single site catalyst system is used for polymerizing the random propylene copolymer (R-PP). It is especially preferred that the single site catalyst system is a supported single site catalyst system, such as a silica supported single site catalyst system. The single catalyst system suitably comprises a specific class of metallocene complexes in combination with an aluminoxane cocatalyst and a silica support.

The metallocene catalyst complexes are either symmetrical or asymmetrical. Asymmetrical means simply that the two ligands forming the metallocene are different, that is, each ligand bears a set of substituents that are chemically different.

The metallocene catalyst complexes preferably are chiral, racemic bridged bisindenyl metallocenes in their anti-configuration. The metallocenes preferably are either C2-symmetric or C1-symmetric. When they are C 1-symmetric they still maintain a pseudo-C2-symmetry since they maintain C2-symmetry in close proximity of the metal center, although not at the ligand periphery. By nature of their chemistry, both a meso form and a racemic enantiomer pair (in case of C2-symmetric complexes) or anti and syn enantiomer pairs (in case of C1-symmetric complexes) are formed during the synthesis of the complexes. Thereby, racemic-anti means that the two indenyl ligands are oriented in opposite directions with respect to the cyclopentadienyl-metal-cyclopentadienyl plane, while racemic-syn means that the two indenyl ligands are oriented in the same direction with respect to the cyclopentadienyl-metal-cyclopentadienyl plane, as shown in the Figure below.

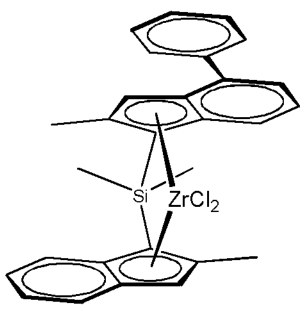

Racemic Anti

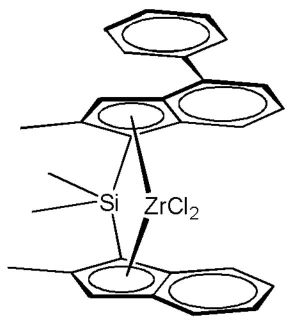

Racemic Syn

Formula (I), and any sub formulae, are intended to cover both syn- and anti- configurations. Preferred metallocene catalyst complexes are in the anti configuration.

The metallocene catalyst complexes are preferably employed as the racemic-anti isomers. Ideally, therefore at least 95 mol%, such as at least 98 mol%, especially at least 99 mol% of the metallocene catalyst complex is in the racemic-anti isomeric form.

In the metallocene catalyst complexes, the following preferences apply. Metallocene catalyst complexes are preferably of formula (I):

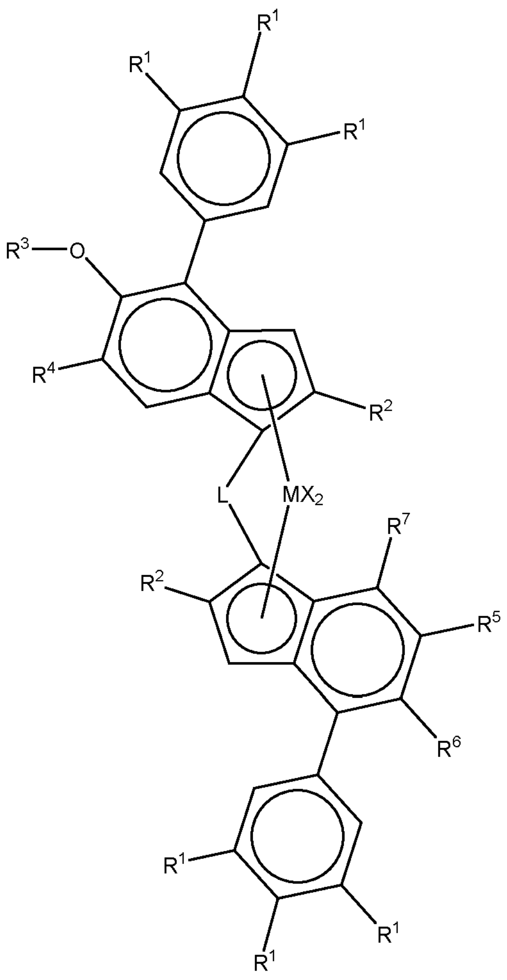

(I)

M is either Zr or Hf, preferably Zr.

Each X independently is a sigma-donor ligand.

Thus each X may be the same or different, and is preferably a hydrogen atom, a halogen atom, a linear or branched, cyclic or acyclic $C_{1-20}$-alkyl or -alkoxy group, a $C_{6-20}$-aryl group, a $C_{7-20}$-alkylaryl group or a $C_{7-20}$-arylalkyl

group; optionally containing one or more heteroatoms of Group 14-16 of the periodic table.

The term halogen includes fluoro, chloro, bromo and iodo groups, preferably chloro groups.

The term heteroatoms belonging to groups 14-16 of the periodic table includes for example Si, N, O or S.

More preferably, each X is independently a hydrogen atom, a halogen atom, a linear or branched $C_{1-6}$-alkyl or $C_{1-6}$-alkoxy group, a phenyl or benzyl group.

Yet more preferably, each X is independently a halogen atom, a linear or branched $C_{1-4}$-alkyl or $C_{1-4}$-alkoxy group, a phenyl or benzyl group.

Most preferably, each X is independently chlorine, benzyl or a methyl group.

Preferably, both X groups are the same.

The most preferred options for both X groups are two chlorides, two methyl or two benzyl groups.

L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms of Group 14-16 of the periodic table or fluorine atoms, or optionally two R' groups taken together can form a ring.

The term heteroatoms belonging to groups 14-16 of the periodic table includes for example Si, N, O or S.

Preferably L is $-R'_2Si-$, ethylene or methylene.

In the formula $--R'_2Si-$, each R' is preferably independently a $C_1$-$C_{20}$-hydrocarbyl group. The term $C_{1-20}$-hydrocarbyl group therefore includes $C_{1-20}$-alkyl, $C_{2-20}$-alkenyl, $C_{2-20}$-alkynyl, $C_{3-20}$-cycloalkyl, $C_{3-20}$-cycloalkenyl, $C_{6-20}$-aryl groups, $C_{7-20}$-alkylaryl groups or $C_{7-20}$-arylalkyl groups or of course mixtures of these groups such as cycloalkyl substituted by alkyl. Unless otherwise stated, preferred $C_{1-20}$-hydrocarbyl groups are $C_{1-20}$-alkyl, $C_{4-20}$-cycloalkyl, Cs-zo-cycloalkyl-alkyl groups, $C_{7-20}$-alkylaryl groups, $C_{7-20}$-arylalkyl groups or $C_{6-20}$-aryl groups.

Preferably, both R' groups are the same. It is preferred if R' is a $C_{1-}C_{10}$-hydrocarbyl or $C_{6-}C_{10}$-aryl group, such as methyl, ethyl, propyl, isopropyl, tertbutyl, isobutyl, $C_{3-8}$-cycloalkyl, cyclohexylmethyl, phenyl or benzyl, more preferably both R' are a $C_{1-}C_6$-alkyl, $C_{5-6}$-cycloalkyl or $C_6$-aryl group, and most preferably both R' are methyl or one is methyl and the other is cyclohexyl. Most preferably the bridge is $-Si(CH_3)_2-$.

Each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded.

Preferably, each $R^1$ are independently the same or can be different and are hydrogen, or a linear or branched $C_1$-$C_6$-alkyl group, like methyl or tert.-butyl.

It is for example possible that the C4-phenyl ring is unsubstituted (i.e. all 3 $R^1$ are hydrogen), or substituted in the para position only, like 4'-tert.-butyl phenyl, or di-substituted in the 3' and 5' position, like 3',5'-dimethylphenyl or 3',5'-ditert.-butylphenyl.

Furthermore, it is possible that both phenyl rings have the same substitution pattern or that the two phenyl rings have different substitution patterns.

Each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group.

Preferably, both $R^2$ are the same and are a $CH_2$-$R^8$ group, with $R^8$ being H or linear or branched $C_1$-$C_4$-alkyl group, more preferably, both $R^2$ are the same and are a $CH_2$-$R^8$ group, with $R^8$ being H or linear or branched $C_1$-$C_3$-alkyl group. Most preferably, both $R^2$ are methyl.

$R^3$ is a linear or branched $C_1$-$C_6$-alkyl group, $C_{7-20}$-arylalkyl, $C_{7-20}$-alkylaryl group or $C_6$-$C_{20}$-aryl group.

$R^3$ is a preferably linear or branched $C_1$-$C_6$-alkyl group or $C_{6-20}$-aryl group, such as methyl, ethyl, n-propyl, i-propyl, n-butyl, i-butyl, sec.-butyl and tert.-butyl, preferably a linear $C_1$-$C_4$-alkyl group, more preferably a $C_1$-$C_2$-alkyl group and most preferably methyl.

$R^4$ is a $C(R^9)_3$ group, with $R^9$ being a linear or branched $C_1$-$C_6$-alkyl group.

Preferably each $R^9$ are the same or different with $R^9$ being a linear or branched $C_1$-$C_4$-alkyl group, more preferably with $R^9$ being the same and being a $C_1$-$C_2$-alkyl group. Most preferably, $R^4$ is a tert.-butyl group and hence all $R^9$ groups are methyl.

In one embodiment $R^5$ and $R^6$ independently are the same or can be different and are hydrogen or an aliphatic $C_1$-$C_{20}$-hydrocarbyl group optionally containing one or more heteroatoms from groups 14-16 of the periodic table of elements, like an alkyl or alkoxy group, e.g. a $C_1$-$C_{10}$-alkyl or -alkoxy group.

Preferably, $R^5$ and $R^6$ independently are the same or can be different and are hydrogen or a linear or branched $C_1$-$C_6$ alkyl group, or a $C_1$-$C_6$-alkoxygroup.

More preferably, $R^5$ and $R^6$ independently are the same or can be different and are hydrogen or a linear or branched $C_1$-$C_4$-alkyl group or a $C_1$-$C_4$-alkoxygroup.

In another embodiment $R^5$ and $R^6$ can be joined as parts of the 5-membered ring condensed with indenyl ring which is optionally substituted by n groups $R^{10}$, n being from 0 to 4, preferably 0 or 2 and more preferably 0;
whereby each $R^{10}$ can be the same or different and may be a $C_1$-$C_{20}$-hydrocarbyl group, or a $C_1$-$C_{20}$-hydrocarbyl radical optionally containing one or more heteroatoms belonging to groups 14-16 of the periodic table of elements; preferably

a linear or branched $C_1$-$C_6$-alkyl group.

$R^7$ is H or a linear or branched $C_1$-$C_6$-alkyl group or an aryl or heteroaryl group having 6 to 20 carbon atoms optionally substituted by 1 to 3 groups $R^{11}$.

Preferably, $R^7$ is H or an aryl group having 6 to 10 carbon atoms optionally substituted by 1 to 3 groups $R^{11}$, more preferably $R^7$ is H or a phenyl group optionally substituted by 1 to 3 groups $R^{11}$.

In case R7 is an optionally substituted aryl group having 6 to 10 carbon atoms, like phenyl, each R11 are independently the same or can be different and are hydrogen, a linear or branched $C_1$-$C_6$-alkyl group, a $C_7$-$C_{20}$-arylalkyl, $C_7$- $C_{20}$-alkylaryl group or $C_6$- $C_{20}$-aryl group or an OY group, wherein Y is a $C_1$-$C_{10}$-hydrocarbyl group.

Preferably, each $R^{11}$ are independently the same or can be different and are hydrogen, a linear or branched $C_1$-$C_6$-alkyl group or $C_6$-$C_{20}$-aryl groups or an OY-group, wherein Y is a $C_{1-}C_4$-hydrocarbyl group. More preferably, each $R^{11}$ are independently the same or can be different and are hydrogen or a linear or branched $C_1$-$C_4$-alkyl group or an OY-group, wherein Y is a $C_{1-}C_4$-hydrocarbyl group. Even more preferably, each $R^{11}$ are independently the same or can be different and are hydrogen, methyl, ethyl, isopropyl, tert.-butyl or methoxy, especially hydrogen, methyl or tert.-butyl.

If the aryl group, like the phenyl group is substituted, it is preferably substituted by 1 or 2 $R^{11}$ groups. More preferably the phenyl group is substituted by 2 groups $R^{11}$, even more preferably both $R^{11}$ groups are the same, like 3',5'-dimethyl.

Particularly preferred complexes of the invention include:

rac-dimethylsilanediyl-bis-[2-methyl-4-(3'5'dimethylphenyl)-5-methoxy-6-tert-butylinden-1-yl] zirconium dichloride,
rac-anti-dimethylsilanediyl[2-methyl-4-(4'-tert.-butylphenyl)-inden-1-yl] [2-methyl-4-(4'-tert.-butylphenyl) -5-methoxy-6-tert-butylinden-1-yl] zirconium dichloride,
rac-anti-dimethylsilanediyl[2-methyl-4-(4'-tert.-butylphenyl)-inden-1-yl] [2-methyl-4-phenyl-5-methoxy-6-tert-butylinden-1-yl] zirconium dichloride,
rac-anti-dimethylsilanediyl[2-methyl-4-(3 ',5'-tert-butylphenyl)-1,5,6,7-tetrahydro-s-indacen-1-yl] [2-methyl-4-(3',5'-dimethyl-phenyl)-5-methoxy-6-tert-butylinden-1-yl] zirconium dichloride, rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride,
or their Hf-analogues.

For the avoidance of doubt, any narrower definition of a substituent offered above can be combined with any other broad or narrowed definition of any other substituent.

Throughout the disclosure above, where a narrower definition of a substituent is presented, that narrower definition is deemed disclosed in conjunction with all broader and narrower definitions of other substituents in the application.

The ligands required to form the complexes and hence catalysts can be synthesized by any process and the skilled organic chemist would be able to devise various synthetic protocols for the manufacture of the necessary ligand materials. For Example WO2007/116034 discloses the necessary chemistry. Synthetic protocols can also generally be found in WO2002/02576, WO2011/135004, WO2012/084961, WO2012/001052, WO2011/076780, WO2015/158790 and WO2018/122134. The examples section also provides the skilled person with sufficient direction.

To form an active catalytic species it is normally necessary to employ a cocatalyst as is well known in the art.

In the preferred single site catalyst system a cocatalyst system comprising an aluminoxane cocatalyst is used in combination with the above defined metallocene catalyst complex.

The aluminoxane cocatalyst can be one of formula (II):

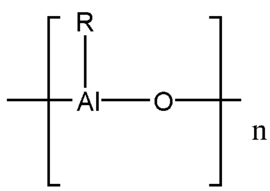

(II)

where n is from 6 to 20 and R has the meaning below.

Aluminoxanes are formed on partial hydrolysis of organoaluminum compounds, for example those of the formula

$AlR_3$, $AlR_2Y$ and $Al_2R_3Y_3$ where R can be, for example, $C_1$-$C_{10}$-alkyl, preferably $C_1$-$C_5$-alkyl, or $C_3$-$C_{10}$-cycloalkyl, $C_7$-$C_{12}$-arylalkyl or -alkylaryl and/or phenyl or naphthyl, and where Y can be hydrogen, halogen, preferably chlorine or bromine, or $C_1$-$C_{10}$-alkoxy, preferably methoxy or ethoxy. The resulting oxygen-containing aluminoxanes are not in general pure compounds but mixtures of oligomers of the formula (II).

The preferred aluminoxane is methylaluminoxane (MAO).

Since the aluminoxanes used according to the invention as cocatalysts are not, owing to their mode of preparation, pure compounds, the molarity of aluminoxane solutions hereinafter is based on their aluminium content.

The cocatalyst system can also comprise a boron containing cocatalyst in combination with the aluminoxane cocatalyst.

Boron containing cocatalysts of interest include those of formula (III)

$BY_3$ (III)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are fluorine, trifluoromethyl, aromatic fluorinated groups such as p-fluorophenyl, 3,5-difluorophenyl, pentafluorophenyl, 3,4,5-trifluorophenyl and 3,5- di(trifluoromethyl)phenyl. Preferred options are trifluoroborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(3,5-difluorophenyl)borane and/or tris (3,4,5-trifluorophenyl)borane.

Particular preference is given to tris(pentafluorophenyl)borane.

However it is preferred that borates are used, i.e. compounds containing a borate.

These compounds generally contain an anion of formula:

$(Z)_4B^-$ (IV)

where Z is an optionally substituted phenyl derivative, said substituent being a halo-$C_{1-6}$-alkyl or halo group. Preferred options are fluoro or trifluoromethyl. Most preferably, the phenyl group is perfluorinated.

Such ionic cocatalysts preferably contain a weakly-coordinating anion such as tetrakis(pentafluorophenyl)borate or tetrakis(3,5-di(trifluoromethyl)phenyl)borate. Suitable counterions are protonated amine or aniline derivatives such as methylammonium, anilinium, dimethylammonium, diethylammonium, N-methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include: tributylammoniumtetra(pentafluorophenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetrakis(pentafluorophenyl)borate, N,N-di(propyl)ammoniumtetrakis(pentafluorophenyl)borate, di(cyclohexyl)ammoniumtetrakist(pentafluorophenyl)borate, triphenylcarbeniumtetrakis(pentafluorophenyl)borate, or ferroceniumtetrakis(pentafluorophenyl)borate. Preference is given to triphenylcarbeniumtetrakis(pentafluorophenyl) borate, N,N-dimethylaniliniumtetrakis(pentafluorophenyl)borate, N,N- dimethylcyclohexylammoniumtetrakis(pentafluorophenyl)borate or N,N- dimethylbenzylammoniumtetrakis(pentafluorophenyl)borate.

It has been surprisingly found that certain boron containing cocatalysts are especially preferred. Preferred borates therefore comprise the trityl, i.e. triphenylcarbenium, ion. Thus, the use of $Ph_3CB(PhF_5)_4$ and analogues therefore are especially favoured.

Suitable amounts of cocatalyst will be well known to the person skilled in the art.

Preferably, the amount of cocatalyst is chosen to reach below defined molar ratios.

The molar ratio of Al from the aluminoxane to the metal ion (M) (preferably zirconium) of the metallocene Al/M may be in the range 1:1 to 2000:1 mol/mol, preferably 10:1 to 1000:1, and more preferably 50:1 to 600:1 mol/mol.

The molar ratio of feed amounts of optional boron (B) to the metal ion (M) (preferably zirconium) of the metallocene boron/M may be in the range 0.1:1 to 10:1 mol/mol, preferably 0.3:1 to 7:1, especially 0.3:1 to 5:1 mol/mol.

Even more preferably, the molar ratio of feed amounts of optional boron (B) to metal ion (M) (preferably zirconium) of the metallocene boron/M is from 0.3:1 to 3:1

The metallocene complex as described above is used in combination with a suitable cocatalyst combination as described above.

The preferred catalyst system is used in supported form. The particulate support material used is silica or a mixed oxide such as silica-alumina, in particular silica.

The use of a silica support is preferred. The skilled man is aware of the procedures required to support a

metallocene catalyst.

Especially preferably, the support is a porous material so that the complex may be loaded into the pores of the particulate support, e.g. using a process analogous to those described in WO94/14856, WO95/12622, WO2006/097497 and EP18282666.

The average particle size of the silica support can be typically from 10 to 100 μm. However, it has turned out that special advantages can be obtained, if the support has an average particle size from 15 to 80 μm, preferably from 18 to 50 μm.

The average pore size of the silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content. The use of these supports is routine in the art.

The catalyst can contain from 10 to 100 μmol of transition metal per gram of silica, and 3 to 15 mmol of Al per gram of silica.

Preparation steps:

Step a)

In step a) the silica support is reacted with aluminoxane cocatalyst.

Preferably, the reaction is done with the synthesis stoichiometry of Al in the aluminoxane to silica support in the range of 3-12 mmol Al/g SiOz.

The silica support is preferably calcined before step a) for removing moisture from the surface thereof. The calcination temperature is normally in the range of from 200 to 800 °C, preferably in the range of from 400 to 650 °C.

The silica support is then suspended in a suitable hydrocarbon solvent, such as toluene. Suspending is done under inert gas atmosphere, e.g. under nitrogen, at a temperature of from 15 °C to 25 °C.

The silica/solvent, preferably silica/toluene, suspension is stirred for some minutes, preferably for 5 to 60 minutes, more preferably from 10 to 30 minutes.

Then aluminoxane cocatalyst, preferably MAO (e.g. as a 30 wt% solution in toluene), is added to the silica/toluene suspension, preferably with a stoichiometry of 3-12 mmol Al/g SiOz.

It is preferred that not all of the aluminoxane cocatalyst is added in step a), but the main part of the total amount of aluminoxane cocatalyst. Thus 75.0 to 97.0 wt%, preferably 77.0 to 95.0 wt%, more preferably 85.0 to 92.0 wt%, of the total amount of aluminoxane cocatalyst are added in step a).

After addition of the aluminoxane cocatalyst the silica/solvent/aluminoxane mixture is heated up to a temperature in the range of from 80 °C to 120 °C, preferably from 95 °C to 115 °C and more preferably from 100 °C to 110 °C.

The mixture is stirred for some minutes up to several hours, preferably from 60 minutes up to 5 hours, more preferably from 90 minutes up to 3 hours, at this temperature.

Afterwards stirring is stopped, the so obtained slurry is allowed to settle and the mother liquor is removed, e.g. by filtering off or decantation.

Subsequently the remaining aluminoxane cocatalyst treated silica support is preferably washed one or more times, e.g. once or twice, more preferably twice with toluene and optionally one more time with heptane at elevated temperature in a range of from 70 °C to 115 °C, preferably from 80 °C to 110 °C and more preferably from 90 °C to 100°C.

Preferably, the aluminoxane cocatalyst treated silica support is subsequently dried, preferably first at suitable temperatures, e.g. at 40 to 80 °C, preferably at 50 to 70 °C, more preferably at 58 to 62 °C, under nitrogen atmosphere and subsequently under vacuum.

Step b)

In step b) the above defined metallocene complex of formula (I) is reacted with aluminoxane cocatalyst in a suitable hydrocarbon solvent, such as toluene. Preferably, the same hydrocarbon solvent as in step a) is used.

In this step the remaining part of aluminoxane cocatalyst, preferably MAO (e.g. as a 30 wt% solution in toluene), i.e. 3.0 to 25.0 wt%, preferably 5.0 to 23.0 wt%, more preferably 8.0 to 13.0 wt%, of the total amount of aluminoxane cocatalyst are added in step b) to the metallocene complex of formula (I) and the so obtained solution is stirred for several minutes, preferably from 10 to 120 minutes, more preferably from 20 to 100 minutes and even more preferably from 40 to 80 minutes. Stirring is done at room temperature, e.g. at a temperature of from 15 °C to 25 °C, preferably 18 °C to 22 °C.

Optional step c)

To the solution of metallocene/aluminoxane cocatalyst in a suitable hydrocarbon solvent, preferably in toluene, (prepared in step b) optionally the boron containing cocatalyst, like borate cocatalyst, if present in the single site catalyst system, is added to obtain a solution of metallocene complex of formula (I), boron containing cocatalyst and aluminoxane cocatalyst in a suitable hydrocarbon solvent, preferably in toluene.
The boron containing cocatalyst is added in an amount that a boron/M molar ratio of feed amounts in the range of 0.1:1 to 10:1 is reached. Preferably, the molar ratio of feed amounts boron/M is in the range of 0.3:1 to 7:1, more preferably 0.3:1 to 5.0:1, most preferably 0.3:1 to 3:1. M is Hf or Zr, preferably Zr.
The so obtained solution is further stirred for several minutes, preferably from 10 to 120 minutes, more preferably from 20 to 100 minutes and even more preferably from 40 to 80 minutes. Stirring is done at a temperature of from 15 °C to 25 °C, preferably 18 °C to 22 °C.

Optional step d)

The solution obtained in step c) is then added to the aluminoxane cocatalyst treated support obtained in step a), yielding the supported catalyst system.
Steps c) and d) are applied for single site catalyst systems comprising a cocatalyst system comprising a boron containing cocatalyst in addition to the aluminoxane cocatalyst. For single site catalyst systems comprising a cocatalyst system only comprising an aluminoxane cocatalyst steps c) and d) are omitted.

Step e)

In the final step, the so obtained supported catalyst system can optionally be washed with an appropriate hydrocarbon solvent such as toluene or heptane and is then dried, preferably in vacuum to yield free flowing powder.
The amounts of silica support, aluminoxane, preferably MAO, optional boron containing cocatalyst and metallocene depend on the desired above defined ratios (Al/M, Al/$SiO_2$, M/SiOz, optional boron/M; M being Hf or Zr, preferably Zr).

• *Recovered random propylene copolymer (R-PP)*

The propylene copolymer which is recovered from the polymerization step in step b) of the process of the invention is herein denoted "recovered random propylene copolymer (R-PP)" or simply "propylene copolymer".
The propylene copolymer is preferably a random propylene copolymer (R-PP) as described above.
The random propylene copolymer (R-PP) is modified during an extrusion step in the presence of a peroxide and bifunctionally unsaturated monomers selected from the group consisting of 1,3-butadiene, isoprene, dimethyl butadiene and divinylbenzene, especially in the presence of peroxide and 1,3-butadiene, in order to introduce long chain branching into the random propylene copolymer (R-PP) in process step c) of the process of the invention, i.e. to obtain the high melt strength polypropylene (HMS-PP).

• *Introduction of long chain branching during extrusion step*

The long-chain branching is introduced into the random propylene copolymer (R-PP) by a reactive modification. This reactive modification process is also part of the present invention. The reactive modification for producing the high melt strength polypropylene (HMS-PP) is preferably performed by a reaction of the random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene.
As mentioned above, for the introducing of long-chain branches peroxide is used. Generally, peroxides are used as thermally decomposing free radical-forming agents. Preferably, the term "peroxide" according to this invention is understood as thermally decomposing free radical-forming agent selected from the group comprising acyl peroxide, alkyl peroxide, hydroperoxide, perester, peroxycarbonate and mixtures of any of them. The following listed peroxides are particularly preferred:

a) acyl peroxides (ACPER): benzoyl peroxide, 4-chlorobenzoyl peroxide, 3-methoxybenzoyl peroxide and/or methyl benzoyl peroxide.
b) alkyl peroxides (ALPER): allyl t-butyl peroxide, 2,2-bis(t-butylperoxybutane), 1,1-bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(t-amylperoxy)cyclohexane, t-amyl peroxide, t-butylcumyl peroxide, t-butyl peroxide and/or 1-hydroxybutyl n-butyl peroxide.
c) peresters and peroxy carbonates (PER): butyl peracetate, cumyl peracetate, cumyl perpropionate, cyclohexyl peracetate, di-t-butyl peradipate, di-t-butyl perazelate, di-t-butyl perglutarate, di-t-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Also contemplated are mixtures of these above listed thermally decomposing free radical-forming agents. So for example the following combinations are possible:

i) ACPER and ALPER
ii) ACPER and PER
iii) ALPER and PER
iv) ACPER and ALPER and PER

The man skilled in the art knows how to choose the appropriate peroxide that will thermally decompose during the preferred process for the production of the high melt strength polypropylene (HMS-PP) according to the present invention. For example, the man skilled in the art will consider the decomposition temperature of the peroxide with respect to the temperature used in the preferred process for the production of the high melt strength polypropylene (HMS-PP).

In the preferred process for the production of the high melt strength polypropylene (HMS-PP), the random propylene copolymer (R-PP) is generally mixed with 0.10 to 1.00 parts per weight (ppw) of peroxide per 100 parts per weight of random propylene copolymer (R-PP).

In the preferred process for the production of the high melt strength polypropylene (HMS-PP), bifunctionally unsaturated monomers selected from the group consisting of 1,3-butadiene, isoprene, dimethyl butadiene and divinylbenzene, especially 1,3-butadiene, is used next to the peroxide.

In the preferred process for the production of the high melt strength polypropylene (HMS-PP) the peroxide can be used in a concentration of 0.05 to 1.50 parts per weight (ppw) of bifunctionally unsaturated monomers, preferably 1,3-butadiene, per 100 parts per weight of the random propylene copolymer (R-PP).

A more preferred process for the production of the high melt strength polypropylene (HMS-PP) is such a process comprising the steps: mixing the random propylene copolymer (R-PP) with peroxide and bifunctionally unsaturated monomers, especially 1,3-butadiene, at a temperature of 20 to 100 °C for at least 2 minutes to form a pre-mixed material, and melt mixing the pre-mixed material in a melt mixing device at a barrel temperature in the range of 180 to 300 °C.

It should be understood that when the peroxide and the bifunctionally unsaturated monomers, especially 1,3-butadiene, are used, the addition of the peroxide and the bifunctionally unsaturated monomers may be achieved in various manners, known by the man skilled in the art, for example: at once in a mixing step or split up in two additions: a first addition in a mixing step and a second addition in a melt-mixing step. Complete addition of the peroxide and the bifunctionally unsaturated monomers in a mixing step is preferred.

The bifunctionally unsaturated monomers are optionally added to and mixed with the random propylene copolymer (R-PP) and the peroxide in the form of a masterbatch composition during the process for the production of the high melt strength polypropylene (HMS-PP).

The mixing step of the random propylene copolymer (R-PP) with the peroxide and the bifunctionally unsaturated monomers to form a pre-mixed material is generally carried out in a powder mixing device, like a horizontal mixer with paddle stirrer. The mixing step is generally carried out at a temperature range of 20 to 100 °C, preferably at a temperature range of 30 to 90 °C, more preferably at a temperature range of 40 to 80 °C. The residence time of the random propylene copolymer (R-PP) in the mixing step is usually at least 2 minutes, preferably in the range of 5 to 30 minutes, more preferably in the range of 8 to 20 minutes. Following the mixing step, the pre-mixed material is then melt mixed at a barrel temperature in the range of 180 to 300 °C, which is not necessarily constant over the complete melt-mixing step. The barrel temperature is preferably in the range of 200 to 280 °C. The pre-mixed material is preferably melt-mixed in a continuous melt mixing device like for example a single screw extruder, a co-rotating twin screw extruder or a co-rotating kneader. Preferably, the melt mixing device includes a feed zone, a kneading zone and a die zone. More preferably, a specific temperature profile is maintained along the screw of the melt-mixing device, having an initial temperature T1 in the feed zone, a maximum temperature T2 in the kneading zone and a final temperature T3 in the

die zone, all temperatures being defined as barrel temperatures. Barrel temperature T1 (in the feed zone) is preferably in the range of 180 to 260 °C. Barrel temperature T2 (in the kneading zone) is preferably in the range of 260 to 300 °C. Barrel temperature T3 (in the die zone) is preferably in the range of 220 to 280 °C. The screw speed of the melt mixing device can be adjusted depending on the material characteristics. The man skilled in the art is well familiar with this and can easily determine the appropriate screw speed. Generally, the screw speed is adjusted to a range from 100 to 750 rotations per minute (rpm), preferably to a range from 150 to 650 rotations per minute (rpm).

• *Recovered high melt strength polypropylene (HMS-PP)*

From said extrusion and modification step c) as described above the high melt strength polypropylene (HMS-PP) is recovered. The recovered high melt strength polypropylene (HMS-PP) of process step d) of the process according to the invention may be additivated.

Following the melt-mixing step, the resulting high melt strength polypropylene (HMS-PP) melt is generally pelletized, for example in an underwater pelletizer or after solidification of one or more strands in a water bath, in a strand pelletizer.

Illustrative additives to be used in the high melt strength polypropylene (HMS-PP) according to the present invention include, but are not limited to, stabilizers such as antioxidants (for example sterically hindered phenols, phosphites/phosphonites, sulphur containing antioxidants, alkyl radical scavengers, aromatic amines, hindered amine stabilizers, or blends thereof), metal deactivators (for example Irganox ® MD 1024), or UV stabilizers (for example hindered amine light stabilizers). Other typical additives are modifiers such as antistatic or antifogging agents (for example ethoxylated amines and amides or glycerol esters), acid scavengers (for example Ca-stearate), blowing agents, cling agents (for example polyisobutene), lubricants and resins (for example ionomer waxes, polyethylene- and ethylene copolymer waxes, Fischer-Tropsch waxes, montan-based waxes, fluoro-based compounds, or paraffin waxes), nucleating agents (for example talc, benzoates, phosphorous-based compounds, sorbitoles, nonitol-based compounds or amide-based compounds), as well as slip and antiblocking agents (for example erucamide, oleamide, talc, natural silica and synthetic silica or zeolites) and mixtures thereof.

## Article

The present invention is also directed to a foamed article comprising, preferably comprising at least 90 wt.-%, based on the total weight of the foamed article, of the high melt strength polypropylene (HMS-PP) according this invention. The present invention is especially directed to a foamed article consisting of the high melt strength polypropylene (HMS-PP) according this invention.

For example the foamed article comprises, preferably comprises at least 90 wt.-%, based on the total weight of the foamed article, of the high melt strength polypropylene (HMS-PP) wherein the high melt strength polypropylene (HMS-PP) has

(a) a 1-hexene content, based on the high melt strength polypropylene (HMS-PP), in the range of 1.0 to 3.0 mol.-% determined by $^{13}$C-NMR spectroscopy, and
(b) an ethylene content, based on the high melt strength polypropylene (HMS-PP), in the range of 1.0 to 4.5 mol.-% determined by $^{13}$C-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) a xylene hot insoluble (XHU) fraction in the range of 0.03 to 0.15 wt.-% measured according to DIN EN 579,
(f) a xylene cold soluble (XCS) fraction in the range in the range of 0.5 to 3.5 wt.-% measured according to ISO 16152 (25 °C), and
(g) optionally 2,1 regio-defects in the range of 0.10 to 0.50 %, determined by $^{13}$C-NMR spectroscopy,

preferably wherein still further the high melt strength polypropylene (HMS-PP) bears long-chain branches originating from bifunctionally unsaturated monomers selected from the group consisting of 1,3-butadiene, isoprene, dimethyl butadiene and divinylbenzene, especially from 1,3-butadiene.

It is especially preferred that the foamed article comprises, preferably comprises at least 90 wt.-%, based on the total weight of the foamed article, of the high melt strength polypropylene (HMS-PP) wherein the high melt strength polypropylene (HMS-PP) has

(a) a 1-hexene content, based on the high melt strength polypropylene (HMS-PP), in the range of 1.0 to 3.0 mol.-

% determined by $^{13}$C-NMR spectroscopy, and
(b) an ethylene content, based on the high melt strength polypropylene (HMS-PP), in the range of 1.0 to 4.5 mol.-% determined by $^{13}$C-NMR spectroscopy,
wherein further the high melt strength polypropylene (HMS-PP) has
(c) an F30 melt strength in the range of 26.0 to 50.0 cN measured according to ISO 16790:2005 at a die pressure of 30 bar,
(d) a melt flow rate $MFR_2$ (230 °C, 2.16 kg) measured according to ISO 1133 in the range of 0.5 to 4.0 g/10min,
(e) a xylene hot insoluble (XHU) fraction in the range of 0.03 to 0.15 wt.-% measured according to DIN EN 579,
(f) a xylene cold soluble (XCS) fraction in the range in the range of 0.5 to 3.5 wt.-% measured according to ISO 16152 (25 °C), and
(g) optionally 2,1 regio-defects in the range of 0.10 to 0.50 %, determined by $^{13}$C-NMR spectroscopy,
wherein further the high melt strength polypropylene (HMS-PP) has been obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has
(h) a 1-hexene content, based on the random propylene copolymer (R-PP), in the range of in the range of 1.0 to 3.0 mol.-% determined by $^{13}$C-NMR spectroscopy, and
(i) an ethylene content, based on the random propylene copolymer (R-PP), in the range of 1.0 to 4.5 mol.-%, determined by $^{13}$C-NMR spectroscopy,
and preferably wherein still further

the random propylene copolymer (R-PP) comprises a first propylene polymer fraction (PP-1) being copolymer of propylene and 1-hexene and a second propylene polymer fraction (PP-2) being a terpolymer of propylene, 1-hexene and ethylene,
wherein

(j) the weight ratio between the first propylene polymer fraction (PP-1) and the second propylene polymer fraction (PP-2) [PP-1/PP-2] is in the range of 50/50 to 70/30 wt.-%, and
(k) the total amount of the first propylene polymer fraction (PP-1) and the second propylene polymer fraction (PP-2), based on the total amount of the random propylene copolymer (R-PP), is at least 90 wt.-%,
and wherein still further
(l) the first propylene polymer fraction (PP-1) has a 1-hexene content, based on the first propylene polymer fraction (PP-1), in the range of 0.2 to 3.0 mol-% determined by $^{13}$C-NMR spectroscopy, and
(m) the second propylene polymer fraction (PP-2) has a 1-hexene content, based on the second propylene polymer fraction (PP-2), in the range of 1.5 to 5.0 mol-%, determined by $^{13}$C-NMR spectroscopy and an ethylene content, based on the second propylene polymer fraction (PP-2), in the range of 4.5 to 12.0 mol-% determined by $^{13}$C-NMR spectroscopy,
preferably with the proviso that
(n) the 1-hexene content in the second propylene polymer fraction (PP-2) is by at least 0.5 mol-%, like 0.5 to 3.5 mol-%, than in the first propylene polymer fraction (PP-1).

**Use**

Further the high melt strength polypropylene (HMS-PP) according this invention is used for making foamed article.
In the following, the present invention is described by way of examples.

## EXAMPLES

### 1. Determination methods

The following definitions of terms and determination methods apply for the above general description of the invention as well as to the below examples unless otherwise defined.

#### a) Melt Flow Rate

The melt flow rate ($MFR_2$) is determined according to ISO 1133 and is indicated in g/10min. The $MFR_2$ of polypropylene is determined at a temperature of 230 °C and under a load of 2.16 kg.

**b) XHU fraction. Gel content**

The xylene hot insoluble (XHU) fraction is determined according to DIN EN 579; 1993-09 . About 2.0 g of the polymer ($m_p$) are weighted and put in a mesh of metal, which is weighted, the total weight being represented by ($m_{p+m}$). The polymer in the mesh is extracted in a Soxhlet apparatus with boiling xylene for 5 hours. The eluent is then replaced by fresh xylene and boiling is continued for another hour. Subsequently, the mesh is dried and weighted again ($m_{XHU+m}$). The mass of the xylene hot insoluble ($m_{XHU}$) obtained by the formula $m_{XHU+m}$-$m_m$=$m_{XHU}$ is put in relation to the weight of the polymer ($m_p$) to obtain the fraction of xylene insolubles $m_{XHU}/m_p$.

**c) $F_{30}$ melt strength and $v_{30}$ melt extensibility**

The test described herein follows ISO 16790; 1th edition; 2005-06-15. An apparatus according to Fig. 1 of ISO 16790 is used. The strain hardening behavior is determined by the method as described in the article "Rheotens-Mastercurves and Drawability of Polymer Melts", M. H. Wagner, Polymer Engineering and Sience, Vol. 36, pages 925 to 935. The strain hardening behavior of polymers is analyzed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle, a melt is pressed or extruded through a round die and the resulting strand is hauled off. The stress on the extrudate is recorded as a function of melt properties and measuring parameters (especially the ratio between output and haul-off speed, practically a measure for the extension rate). For the results presented below, the materials were extruded with a lab extruder HAAKE Polylab system and a gear pump with cylindrical die (L/D = 6.0/2.0 mm). For measuring F30 melt strength and v30 melt extensibility, the pressure at the extruder exit (= gear pump entry) is set to 30 bars through bypassing a part of the extruded polymer.

The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero). Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec$^2$. The Rheotens was operated in combination with the PC program EXTENS. This is a real-time data-acquisition program, which displays and stores the measured data of tensile force and drawdown speed. The end points of the Rheotens curve (force versus pulley rotary speed), where the polymer strand ruptures, are taken as the F30 melt strength and v30 melt extensibility values respectively.

**d) Xylene cold soluble fraction (XCS, wt%)**

The amount of the polymer soluble in xylene is determined at 25.0 °C according to ISO 16152; 1th edition; 2005-07-01.

**e) Melting temperature $T_m$ and crystallization temperature $T_c$**

The melting temperature $T_m$ is determined by differential scanning calorimetry (DSC) according to ISO 11357-3 with a TA-Instruments 2920 Dual-Cell with RSC refrigeration apparatus and data station. A heating and cooling rate of 10 °C/min is applied in a heat/cool/heat cycle between +23 and +210 °C. The crystallization temperature ($T_c$) is determined from the cooling step while melting temperature ($T_m$) and melting enthalpy ($H_m$) are being determined in the second heating step.

**f) Quantification of copolymer microstructure by $^{13}$C-NMR spectroscopy**

Quantitative $^{13}C\{^1H\}$ NMR spectra recorded in the molten-state using a Bruker Avance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.(Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W.,

Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^{1}H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-hexene were observed and the comonomer content quantified in the following way.

The amount of 1-hexene incorporated in PHP isolated sequences was quantified using the integral of the αB4 sites at 44.2 ppm accounting for the number of reporting sites per comonomer:

$$H = I\alpha B4 / 2$$

The amount of 1-hexene incorporated in PHHP double consecutive sequences was quantified using the integral of the ααB4 site at 41.7 ppm accounting for the number of reporting sites per comonomer:

$$HH = 2 * I\alpha\alpha B4$$

when double consecutive incorporation was observed the amount of 1-hexene incorporated in PHP isolated sequences needed to be compensated due to the overlap of the signals αB4 and αB4B4 at 44.4 ppm:

$$H = (I\alpha B4 - 2 * I\alpha\alpha B4) / 2$$

the total 1-hexene content was calculated based on the sum of isolated and consecutively incorporated 1-hexene:

$$Htotal = H + HH$$

when no sites indicative of consecutive incorporation observed the total 1-hexeen comonomer content was calculated solely on this quantity:

$$Htotal = H$$

characteristic signals indicative of regio 2,1-erythro defects were observed (Resconi, L., Cavallo, L., Fait, A., Piemontesi, F., Chem. Rev. 2000, 100, 1253).

The presence of 2,1-erythro regio defects was indicated by the presence of the Pαβ (21e8) and Pαγ (21e6) methyl sites at 17.7 and 17.2 ppm and confirmed by other characteristic signals.

The total amount of secondary (2,1-erythro) inserted propene was quantified based on the αα21e9 methylene site at 42.4 ppm:

$$P21 = I\alpha\alpha 21e9$$

The total amount of primary (1,2) inserted propene was quantified based on the main Sαα methylene sites at 46.7 ppm and compensating for the relative amount of 2,1-erythro, αB4 and ααB4B4 methylene unit of propene not accounted for (note H and HH count number of hexene monomers per sequence not the number of sequences):

$$P12 = I_S\alpha\alpha + 2*P21 + H + HH / 2$$

The total amount of propene was quantified as the sum of primary (1,2) and secondary (2,1-erythro) inserted propene:

$$Ptotal = P12 + P21 = I_S\alpha\alpha + 3* I\alpha\alpha 21e9 + (I\alpha B4 - 2 * I\alpha\alpha B4) / 2 + I\alpha\alpha B4$$

This simplifies to:

$$Ptotal = I_S\alpha\alpha + 3^* I\alpha\alpha21e9 + 0.5^*I\alpha B4$$

The total mole fraction of 1-hexene in the polymer was then calculated as:

$$fH = Htotal / ( Htotal + Ptotal)$$

The full integral equation for the mole fraction of 1-hexene in the polymer was:

$$fH = (((I\alpha B4 - 2 * I\alpha\alpha B4) / 2) + (2 * I\alpha\alpha B4)) / ((I_S\alpha\alpha + 3 * I\alpha\alpha21e9 + 0.5 * I\alpha B4) + ((I\alpha B4 - 2 * I\alpha\alpha B4) / 2) + (2 * I\alpha\alpha B4))$$

This simplifies to:

$$fH = (I\alpha B4/2 + I\alpha\alpha B4) / (I_S\alpha\alpha + 3^* I\alpha\alpha21e9 + I\alpha B4 + I\alpha\alpha B4)$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * ( fH * 84.16) / ( (fH * 84.16) + ((1 - fH) * 42.08) )$$

**Calculation** of comonomer content of the second random propylene copolymer (B):

$$\frac{C(CPP) - w(A)x\, C(A)}{w(B)} = C(B)$$

wherein

w(A) is the weight fraction of the first random propylene copolymer (A),
w(B) is the weight fraction of the second random propylene copolymer (B),
C(A) is the comonomer content [in wt.-%] measured by $^{13}C$ NMR spectroscopy of the first random propylene copolymer (A), i.e. of the product of the first reactor (R1),
C(CPP)is the comonomer content [in wt.-%] measured by $^{13}C$ NMR spectroscopy of the product obtained in the second reactor (R2), i.e. the mixture of the first random propylene copolymer (A) and the second random propylene copolymer (B) [of the propylene copolymer (C-PP)],
C(B) is the calculated comonomer content [in wt.-%] of the second random propylene copolymer (B).

**2. Preparation of the copolymer (R-PP)**

a) Preparation of the single site catalyst system 1

• Catalyst Complex

The catalyst complex used in the polymerization processes for copolymer R-PP used for the inventive example is:

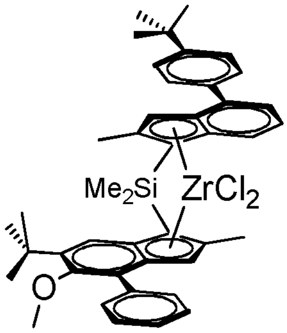

The metallocene (MC1) (rac-anti-dimethylsilandiyl(2-methyl-4-phenyl-5-methoxy-6-tert-butyl-indenyl)(2-methyl-4-(4-tert-butylphenyl)indenyl)zirconium dichloride) has been synthesized as described in WO 2013/007650, E2.

The catalyst system was prepared using metallocene MC1 and a cocatalyst system of MAO and trityl tetrakis(pentafluorophenyl)borate. The catalyst was supported onto silica.

• Preparation of the MAO-silica support

A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (7.4 kg) was added from a feeding drum followed by careful pressuring and depressurising with nitrogen using manual valves. Then toluene (32.2 kg) was added. The mixture was stirred (40 rpm) for 15 min. Next 30 wt% solution of MAO in toluene (17.5 kg) from Lanxess was added via 12 mm line on the top of the reactor within 70 min. The reaction mixture was then heated up to 90°C and stirred at 90 °C for additional two hours. The slurry was allowed to settle and the mother liquor was filtered off. The MAO treated silica support was washed twice with toluene (32.2 kg) at 90°C, following by settling and filtration. The reactor was cooled off to 60°C and the solid was washed with heptane (32.2 kg). Finally MAO treated SiOz was dried at 60°C for 2h under nitrogen flow 2 kg/h, pressure 0.3 barg and then for 5 hours under vacuum (-0.5 barg) with stirring at 5 rpm. MAO treated support was collected as a free-flowing white powder found to contain 12.7% Al by weight.

• Preparation of the single site catalyst system 1:

30 wt.-% MAO in toluene (2.2 kg) was added into a steel nitrogen blanked reactor via a burette at 20 °C. Toluene (7 kg) was then added under stirring. Metallocene MC1 (286 g) was added from a metal cylinder followed by flushing with 1 kg toluene. The mixture was stirred for 60 minutes at 20 °C. Trityl tetrakis(pentafluorophenyl) borate (336 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60 °C for 2h and additionally for 5 h under vacuum (-0.5 barg) under stirring. Dried catalyst was sampled in the form of pink free flowing powder containing 13.9 wt.-% Al and 0.26 wt.-% Zr, Al/Zr (mol/mol) 180.

a) Polymerization of the copolymer (R-PP)

The copolymer (R-PP) has been produced in a Borstar® plant with a prepolymerization reactor, one slurry loop reactor and one gas phase reactor in the presence of the single site catalyst system 1. The feeds and polymerization conditions in the different polymerization reactors are listed in Table 1.

**Table 1:** Polymerization conditions of R-PP

| | | R-PP |
|---|---|---|
| *Prepolymerization* | | |
| Temperature | [°C] | 20 |
| Pressure | [kPa] | 5365 |
| Catalyst feed | [g/h] | 5.4 |
| $H_2$ feed | [g/h] | 0.3 |

(continued)

| | | R-PP |
|---|---|---|
| Residence time | [h] | 0.35 |
| **Loop (Reactor 1)** | | |
| Temperature | [°C] | 75 |
| Pressure | [kPa] | 5055 |
| $H_2/C_3$ ratio | [mol/kmol] | 0.04 |
| $C_6/C_3$ ratio | [mol/kmol] | 8.1 |
| $C_2/C_3$ ratio | [mol/kmol] | 0.0 |
| Residence time | [h] | 0.5 |
| Loop reactor split | [wt.-%] | 60 |
| $MFR_2$ | [g/10 min] | 0.61 |
| C2 content of Loop | [mol-%] | 0.0 |
| C6 content of Loop | [mol-%] | 0.7 |
| **GPR (Reactor 2)** | | |
| Temperature | [°C] | 80 |
| Pressure | [kPa] | 2500 |
| $H_2/C_3$ ratio | [mol/kmol] | 0.8 |
| $C_6/C_3$ ratio | [mol/kmol] | 5.6 |
| $C_2/C_3$ ratio | [mol/kmol] | 43.4 |
| Polymer residence time | [h] | 2.0 |
| GPR reactor split | [wt.-%] | 40 |
| C2 content of GPR | [mol-%] | 8.0 |
| C6 content of GPR | [mol-%] | 3.2 |
| **R-PP properties** | | |
| XCS | [wt.-%] | 0.9 |
| $MFR_2$ | [g/10 min] | 0.5 |
| C2 content | [mol-%] | 3.2 |
| C6 content | [mol-%] | 1.7 |
| Tm | [°C] | 137 |
| Tc | [°C] | 99 |

**3. Reactive modification**

For the preparation of the high melt strength polypropylene (HMS-PP) the copolymer (R-PP) was subjected to reactive modification using. The reactive modification of the copolymer (R-PP) was performed in line with the process description of EP 2 520 425 A1. Both the butadiene (BD) and the peroxide (POX) (tert-butylperoxy isopropyl carbonate (CAS No. 2372-21-6)) were pre-mixed with the copolymer (R-PP) prior to the melt-mixing step in a horizontal mixer with paddle stirrer at a temperature of 65 °C, maintaining an average residence time of 15 minutes. The amount of BD and POX is based on the total amount of the mixture of the copolymer (R-PP), POX and BD. The premixture was transferred under inert atmosphere to a co-rotating twin screw extruder of the type Theyson TSK60 having a barrel diameter of 60 mm and an L/D-ratio of 48 equipped with a high intensity mixing screw having three kneading zones and a two-step

degassing setup. A melt temperature profile with initial temperature T1 = 40 °C in the feed zone, maximum temperature T2 = 240 °C in the last kneading zone and a final temperature T3=230 °C in the die zone, all temperatures being defined as barrel temperature, was selected. The screw speed was set at 350 rpm. Following the melt-mixing step, the resulting melt of the high melt strength polypropylene (HMS-PP) was pelletized after solidification of the strands in a water bath in a strand pelletizer at a water temperature of 40 °C. Reaction conditions and properties of the resulting high melt strength polypropylene (HMS-PP) "IE1" are summarized in Table 2 for the inventive example and for the comparative example "CE1" (i.e. inventive example 5 of EP 3 018 153).

**Table 2:** Melt mixing conditions and properties of the high melt strength polypropylenes

| | | IE1 | CE1 |
|---|---|---|---|
| Type of polymer | | R-PP | IE2* |
| Amount of polymer | [wt.-%] | 99.28 | 98.15 |
| POX Level | [wt.-%] | 0.50 | 0.45 |
| BD level | [wt.-%] | 0.22 | 1.40 |
| **Process data** | | | |
| Screw speed | rpm | 320 | 200 |
| Throughput | kg/h | 200 | 150 |
| Torque | % | 72 | 65 |
| Temperature (T1/T2/T3) | °C | 40/240/230 | 240/280/230 |
| **Composition properties** | | | |
| C2 | [mol-%] | 3.2 | 3.0 |
| C6 | [mol-%] | 1.7 | 0.0 |
| $MFR_2$ | g/10min | 1.4 | 2.2 |
| 2,1-regio defects | [%] | 0.30 | 0.0 |
| F30 | cN | 27.7 | 23.1 |
| v30 | mm/s | 256 | 240 |
| XHU | wt% | 0.09 | 0.23 |
| XCS | wt% | 0.9 | 8.9 |
| Tm | °C | 140 | 151 |
| Tc | °C | 108 | 116 |
| * of IE2 of EP 3 018 153 | | | |

**Claims**

**1.** High melt strength polypropylene (HMS-PP) having

(a) an 1-hexene content, based on the high melt strength polypropylene (HMS-PP), in the range of 0.5 to 5.0 mol-% determined by $^{13}$C-NMR spectroscopy, and
(b) an ethylene content, based on the high melt strength polypropylene (HMS-PP), in the range of 0 to 5.5 mol-% determined by $^{13}$C-NMR spectroscopy,
wherein further the high melt strength polypropylene (HMS-PP) has
(c) a F30 melt strength of at least 24 cN measured according to ISO 16790:2005 at a die pressure of 30 bar, and
(d) 2,1 regio-defects in the range of 0.01 to 0.90 % determined by $^{13}$C-NMR spectroscopy.

**2.** High melt strength polypropylene (HMS-PP) according to claim 1 having a melt flow rate $MFR_2$ (230 °C, 2.16 kg) measured according to ISO 1133 in the range of 0.5 to 4.0 g/10min.

3. High melt strength polypropylene (HMS-PP) according to claim 1 or 2 having an ethylene content, based on the high melt strength polypropylene (HMS-PP), in the range of 1.0 to 4.5 mol.-%, determined by $^{13}$C-NMR spectroscopy.-%.

4. High melt strength polypropylene (HMS-PP) according to any one of the preceding claims having a F30 melt strength in the range of 25.0 to 60.0 cN measured according to ISO 16790:2005 at a die pressure of 30 bar and optionally a V30 melting extensibility of at least 245 mm/s, preferably in the range of 248 to 300 mm/s, measured according to ISO 16790:2005 at a die pressure of 30 bar.

5. High melt strength polypropylene (HMS-PP) according to any one of the preceding claims having a xylene hot insoluble (XHU) fraction in an amount of not more than 0.20 wt.-%, preferably in an amount in the range of 0.01 to 0.20 wt.-%, measured according to DIN EN 579.

6. High melt strength polypropylene (HMS-PP) according to any one of the preceding claims having

(a) a melting temperature Tm in the range of 133 to 145°C measured by DSC according to ISO 11357-3 (heating and cooling rate 10°C/min) and
(b) optionally a crystallization temperature Tc in the range of 95 to 110 °C measured by DSC according to ISO 11357-3 (heating and cooling rate 10°C/min).

7. High melt strength polypropylene (HMS-PP) according to any one of the preceding claims having a xylene cold solubles (XCS) fraction in the range measured according to ISO 16152 (25 °C) in the range of 0.5 to 3.5 wt.-%.

8. High melt strength polypropylene (HMS-PP) according to any one of the preceding claims obtained by treating a random propylene copolymer (R-PP) with peroxide and bifunctionally unsaturated monomers selected from the group consisting of 1,3-butadiene, isoprene, dimethyl butadiene and divinylbenzene, especially with peroxide and 1,3-butadiene, wherein the random propylene copolymer (R-PP) has

(a) an hexene content in the range of 0.5 to 5.0 mol-%, based on the random propylene copolymer (R-PP), determined by $^{13}$C-NMR spectroscopy, and
(b) an ethylene content in the range of 0 to 5.5 mol-%, based on the random propylene copolymer (R-PP), determined by $^{13}$C-NMR spectroscopy.-%.

9. High melt strength polypropylene (HMS-PP) according to claim 8 wherein the random propylene copolymer (R-PP) comprises a first propylene polymer fraction (PP-1) and a second propylene polymer fraction (PP-2),
wherein further

(a) the weight ratio between the first propylene polymer fraction (PP-1) and the second propylene polymer fraction (PP-2) [PP-1/PP-2] is in the range of 50/50 to 70/30 wt.-%, and
(b) optionally the total amount of the first propylene polymer fraction (PP-1) and the second propylene polymer fraction (PP-2), based on the total amount of the random propylene copolymer (R-PP), is at least 90 wt.-%, and wherein still further
(c) the first propylene polymer fraction (PP-1) has

($\alpha$) an 1-hexene content, based on the first propylene polymer fraction (PP-1), in the range of 0.2 to 3.0 mol-% determined by $^{13}$C-NMR spectroscopy, and
($\beta$) an ethylene content, based on the first propylene polymer fraction (PP-1), in the range of 0.0 to 5.0 mol-% determined by $^{13}$C-NMR spectroscopy.

(d) the second propylene polymer fraction (PP-2) has

($\alpha$) an 1-hexene content, based on the second propylene polymer fraction (PP-2), in the range of 1.5 to 6.0 mol-%, determined by $^{13}$C-NMR spectroscopy and
($\beta$) an ethylene content, based on the second propylene polymer fraction (PP-2), in the range of 0.0 to 12.0 mol-% determined by $^{13}$C-NMR spectroscopy.

10. High melt strength polypropylene (HMS-PP) according to claim 9 wherein the first propylene polymer fraction (PP-1) is copolymer of propylene and 1-hexene and the second propylene polymer fraction (PP-2) is a terpolymer of

propylene, 1-hexene and ethylene; wherein further

(a) the first propylene polymer fraction (PP-1) has hexene content, based on the first propylene polymer fraction (PP-1), in the range of 0.2 to 3.0 mol-% determined by $^{13}$C-NMR spectroscopy, and
(b) the second propylene polymer fraction (PP-2) has an hexene content, based on the second propylene polymer fraction (PP-2), in the range of 1.5 to 5.0 mol-%, determined by $^{13}$C-NMR spectroscopy and an ethylene content, based on the second propylene polymer fraction (PP-2), in the range of 4.5 to 12.0 mol-% determined by $^{13}$C-NMR spectroscopy,
preferably with the proviso that
(c) the 1-hexene content in the second propylene polymer fraction (PP-2) is by at least 0.5 mol-%, like 0.5 to 3.5 mol-%, than in the first propylene polymer fraction (PP-1).

**11.** High melt strength polypropylene (HMS-PP) according to any one of the preceding claims being produced according to any one of the claims 14 to 17.

**12.** Use of the high melt strength polypropylene (HMS-PP) according to any one of the preceding claims for making a foamed article.

**13.** Foamed article comprising at least 90 wt.-%, based on the total weight of the foam, of the high melt strength polypropylene (HMS-PP) according to any one of the preceding claims 1 to 11.

**14.** A process for producing the high melt strength polypropylene (HMS-PP) according to any one of the preceding claims 1 to 10 comprising the following steps:

(a) polymerizing propylene and 1-hexene and optionally ethylene in the presence of a single site catalyst system to produce a copolymer (R-PP) of propylene, 1-hexene and optionally ethylene;
(b) recovering said copolymer (R-PP);
(c) extruding said copolymer in the presence of a peroxide and 1,3-butadiene for introducing long chain branching into said copolymer (R-PP) obtaining thereby the high melt strength polypropylene (HMS-PP);
(d) recovering the high melt strength polypropylene (HMS-PP).

**15.** The process according to claim 14 wherein the single site catalyst system comprises

(a) a metallocene complex of formula (I):

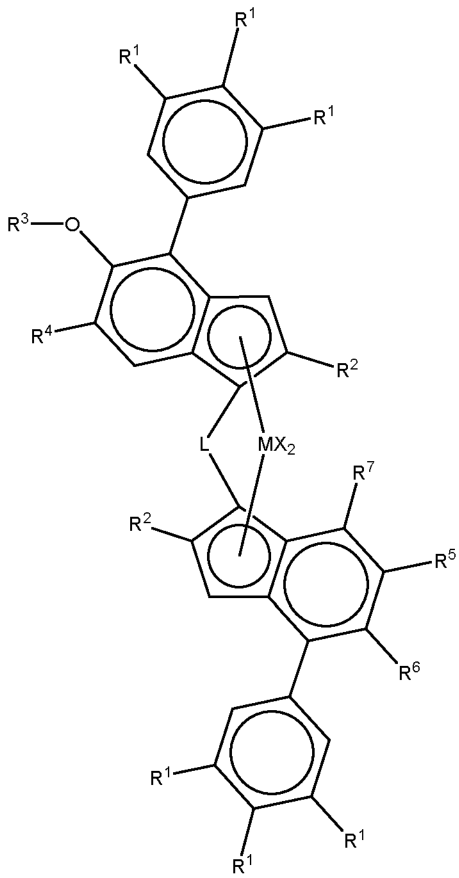

Formula (I)

wherein

M is Zr or Hf

each X independently is a sigma-donor ligand,

L is a divalent bridge selected from -R'$_2$C-, -R'zC-CR'z-, -R'zSi-, -R'$_2$Si-SiR'$_2$-, -R'$_2$Ge-,

wherein each R' is independently a hydrogen atom or a $C_1$-$C_{20}$-hydrocarbyl group optionally containing one or more heteroatoms of Group 14-16 of the periodic table or fluorine atoms, or optionally two R' groups taken together can form a ring,

each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,

each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,

$R^3$ is a linear or branched $C_1$-$C_6$-alkyl group, $C_{7-20}$-arylalkyl, $C_{7-20}$-alkylaryl group or $C_6$-$C_{20}$-aryl group,

$R^4$ is a $C(R^9)_3$ group, with $R^9$ being a linear or branched $C_1$-$C_6$-alkyl group,

$R^5$ is hydrogen or an aliphatic $C_1$-$C_{20}$-hydrocarbyl group optionally containing one or more heteroatoms from groups 14-16 of the periodic table of elements;

$R^6$ is hydrogen or an aliphatic $C_1$-$C_{20}$-hydrocarbyl group optionally containing one or more heteroatoms from groups 14-16 of the periodic table of elements; or

$R^5$ and $R^6$ can be joined as part of a 5-membered ring condensed with the indenyl, which is optionally substituted by n groups $R^{10}$, n being from 0 to 4;

each $R^{10}$ is same or different and may be a $C_1$-$C_{20}$-hydrocarbyl group, or a $C_1$-$C_{20}$-hydrocarbyl radical optionally containing one or more heteroatoms belonging to groups 14-16 of the periodic table of elements;

$R^7$ is H or a linear or branched $C_1$-$C_6$-alkyl group or an aryl or heteroaryl group having 6 to 20 carbon atoms optionally substituted by one to three groups $R^{11}$,

each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hy-

drocarbyl group,

(b) a cocatalyst system comprising an aluminoxane cocatalyst, and
(c) a silica support.

**16.** The process according to claim 14 or 15, wherein the melt mixing the copolymer (R-PP), the peroxide and the 1,3-butadiene are melt mixed in an extruder at barrel temperature in the range of 40 to 280°C.

**17.** The process to any one of the preceding claims 14 to 16, wherein

(a) the amount is 0.10 to 1.00 parts per weight (ppw) of peroxide per 100 parts per weight of random propylene copolymer (R-PP);
(b) the amount is 0.05 to 1.50 parts per weight (ppw) of bifunctionally unsaturated monomers selected from the group consisting of 1,3-butadiene, isoprene, dimethyl butadiene and divinylbenzene, especially 1,3-butadiene, per 100 parts per weight of random propylene copolymer (R-PP).

**Patentansprüche**

**1.** Hochschmelzfestes Polypropylen (HMS-PP), aufweisend

(a) einen 1-Hexengehalt, bezogen auf das hochschmelzfeste Polypropylen (HMS-PP), im Bereich von 0,5 bis 5,0 Mol-%, bestimmt durch $^{13}$C-NMR-Spektroskopie, und
(b) einen Ethylengehalt, bezogen auf das hochschmelzfeste Polypropylen (HMS-PP), im Bereich von 0 bis 5,5 Mol-%, bestimmt durch $^{13}$C-NMR-Spektroskopie,

wobei das hochschmelzfeste Polypropylen (HMS-PP) ferner aufweist:

(c) eine F30-Schmelzefestigkeit von mindestens 24 cN, gemessen nach ISO 16790:2005 bei einem Düsendruck von 30 bar, und
(d) 2,1-Regiofehler im Bereich von 0,01 bis 0,90 %, bestimmt durch $^{13}$C-NMR-Spektroskopie.

**2.** Hochschmelzfestes Polypropylen (HMS-PP) nach Anspruch 1, aufweisend eine Schmelzflussrate $MFR_2$ (230 °C, 2,16 kg), gemessen nach ISO 1133, im Bereich von 0,5 bis 4,0 g/10min.

**3.** Hochschmelzfestes Polypropylen (HMS-PP) nach Anspruch 1 oder 2, aufweisend einen Ethylengehalt, bezogen auf das hochschmelzfeste Polypropylen (HMS-PP), im Bereich von 1,0 bis 4,5 Mol-%, bestimmt durch $^{13}$C-NMR-Spektroskopie.

**4.** Hochschmelzfestes Polypropylen (HMS-PP) nach einem der vorangehenden Ansprüche, aufweisend eine F30-Schmelzfestigkeit im Bereich von 25,0 bis 60,0 cN, gemessen nach ISO 16790:2005 bei einem Düsendruck von 30 bar, und gegebenenfalls eine V30-Schmelzdehnbarkeit von mindestens 245 mm/s, vorzugsweise im Bereich von 248 bis 300 mm/s, gemessen nach ISO 16790:2005 bei einem Düsendruck von 30 bar.

**5.** Hochschmelzfestes Polypropylen (HMS-PP) nach einem der vorangehenden Ansprüche, aufweisend eine in Xylol heißunlösliche Fraktion (XHU) in einer Menge von nicht mehr als 0,20 Gew.-%, vorzugsweise in einer Menge im Bereich von 0,01 bis 0,20 Gew.-%, gemessen nach DIN EN 579.

**6.** Hochschmelzfestes Polypropylen (HMS-PP) nach einem der vorangehenden Ansprüche, aufweisend

(a) eine Schmelztemperatur Tm im Bereich von 133 bis 145 °C, gemessen durch DSC gemäß ISO 11357-3 (Aufheiz- und Abkühlgeschwindigkeit 10 °C/min) und
(b) gegebenenfalls eine Kristallisationstemperatur Tc im Bereich von 95 bis 110 °C, gemessen mittels DSC nach ISO 11357-3 (Aufheiz- und Abkühlgeschwindigkeit 10 °C/min).

**7.** Hochschmelzfestes Polypropylen (HMS-PP) nach einem der vorangehenden Ansprüche, aufweisend eine Xylol kaltlösliche Fraktion (XCS) im Bereich von 0,5 bis 3,5 Gew.-%, gemessen nach ISO 16152 (25 °C).

8. Hochschmelzfestes Polypropylen (HMS-PP) nach einem der vorangehenden Ansprüche, erhalten durch Behandlung eines statistischen Propylencopolymers (R-PP) mit Peroxid und bifunktionell ungesättigten Monomeren, ausgewählt aus der Gruppe bestehend aus 1,3-Butadien, Isopren, Dimethylbutadien und Divinylbenzol, insbesondere mit Peroxid und 1,3-Butadien, wobei das statistische Propylencopolymer (R-PP) aufweist

   (a) einen Hexengehalt im Bereich von 0,5 bis 5,0 Mol-%, bezogen auf das statistische Propylencopolymer (R-PP), bestimmt durch $^{13}C$-NMR-Spektroskopie, und
   (b) einen Ethylengehalt im Bereich von 0 bis 5,5 Mol-%, bezogen auf das statistische Propylencopolymer (R-PP), bestimmt durch $^{13}C$-NMR-Spektroskopie.

9. Hochschmelzfestes Polypropylen (HMS-PP) nach Anspruch 8, wobei das statistische Propylencopolymer (R-PP) eine erste Propylenpolymerfraktion (PP-1) und eine zweite Propylenpolymerfraktion (PP-2) umfasst, wobei ferner

   (a) das Gewichtsverhältnis zwischen der ersten Propylenpolymerfraktion (PP-1) und der zweiten Propylenpolymerfraktion (PP-2) [PP-1/PP-2] im Bereich von 50/50 bis 70/30 Gew.-% liegt, und
   (b) gegebenenfalls die Gesamtmenge der ersten Propylenpolymerfraktion (PP-1) und der zweiten Propylenpolymerfraktion (PP-2), bezogen auf die Gesamtmenge des statistischen Propylencopolymers (R-PP), mindestens 90 Gew.-%, beträgt,
   und wobei noch zusätzlich
   (c) die erste Propylenpolymerfraktion (PP-1) aufweist:

      ($\alpha$) einen 1-Hexengehalt, bezogen auf die erste Propylenpolymerfraktion (PP-1), im Bereich von 0,2 bis 3,0 Mol-%, bestimmt durch $^{13}C$-NMR-Spektroskopie, und
      ($\beta$) einen Ethylengehalt, bezogen auf die erste Propylenpolymerfraktion (PP-1), im Bereich von 0,0 bis 5,0 Mol-%, bestimmt durch $^{13}C$-NMR-Spektroskopie,

   (d) die zweite Propylenpolymerfraktion (PP-2) aufweist:

      ($\alpha$) einen 1-Hexengehalt, bezogen auf die zweite Propylenpolymerfraktion (PP-2), im Bereich von 1,5 bis 6,0 Mol-%, bestimmt durch $^{13}C$-NMR-Spektroskopie, und
      ($\beta$) einen Ethylengehalt, bezogen auf die zweite Propylenpolymerfraktion (PP-2), im Bereich von 0,0 bis 12,0 Mol-%, bestimmt durch $^{13}C$-NMR-Spektroskopie.

10. Hochschmelzfestes Polypropylen (HMS-PP) nach Anspruch 9, wobei die erste Propylenpolymerfraktion (PP-1) ein Copolymer aus Propylen und 1-Hexen und die zweite Propylenpolymerfraktion (PP-2) ein Terpolymer aus Propylen, 1-Hexen und Ethylen ist; wobei ferner

   (a) die erste Propylenpolymerfraktion (PP-1) einen Hexengehalt, bezogen auf die erste Propylenpolymerfraktion (PP-1), im Bereich von 0,2 bis 3,0 Mol-%, bestimmt durch $^{13}C$-NMR-Spektroskopie, aufweist, und
   (b) die zweite Propylenpolymerfraktion (PP-2) einen Hexengehalt, bezogen auf die zweite Propylenpolymerfraktion (PP-2), im Bereich von 1,5 bis 5,0 Mol-%, bestimmt durch $^{13}C$-NMR-Spektroskopie, und einen Ethylengehalt, bezogen auf die zweite Propylenpolymerfraktion (PP-2), im Bereich von 4,5 bis 12,0 Mol-%, bestimmt durch $^{13}C$-NMR-Spektroskopie, aufweist,
   vorzugsweise unter der Bedingung, dass
   (c) der Gehalt an 1-Hexen in der zweiten Propylenpolymerfraktion (PP-2) um mindestens 0,5 Mol-%, wie 0,5 bis 3,5 Mol-%, wie in der ersten Propylenpolymerfraktion (PP-1) ist.

11. Hochschmelzfestes Polypropylen (HMS-PP) nach einem der vorangehenden Ansprüche, hergestellt nach einem der Ansprüche 14 bis 17.

12. Verwendung des hochschmelzfesten Polypropylens (HMS-PP) nach einem der vorangehenden Ansprüche zur Herstellung eines geschäumten Artikels.

13. Geschäumter Artikel, der mindestens 90 Gew.-%, bezogen auf das Gesamtgewicht des Schaums, des hochschmelzfesten Polypropylens (HMS-PP) nach einem der vorangehenden Ansprüche 1 bis 11 umfasst.

14. Verfahren zur Herstellung des hochschmelzfesten Polypropylens (HMS-PP) nach einem der vorangehenden Ansprüche 1 bis 10, umfassend die folgenden Schritte:

(a) Polymerisation von Propylen und 1-Hexen und gegebenenfalls Ethylen in Gegenwart eines Einstellen-Katalysatorsystems, um ein Copolymer (R-PP) aus Propylen, 1-Hexen und gegebenenfalls Ethylen herzustellen;
(b) Gewinnung des Copolymers (R-PP),
(c) Extrudieren des Copolymers in Gegenwart eines Peroxids und von 1,3-Butadien, um eine langkettige Verzweigung in das Copolymer (R-PP) einzuführen, wodurch das hochschmelzfeste Polypropylen (HMS-PP) erhalten wird;
(d) Gewinnung des hochschmelzenden Polypropylens (HMS-PP).

**15.** Verfahren nach Anspruch 14, wobei das Einstellen-Katalysatorsystem Folgendes umfasst

(a) einen Metallocenkomplex der Formel (I):

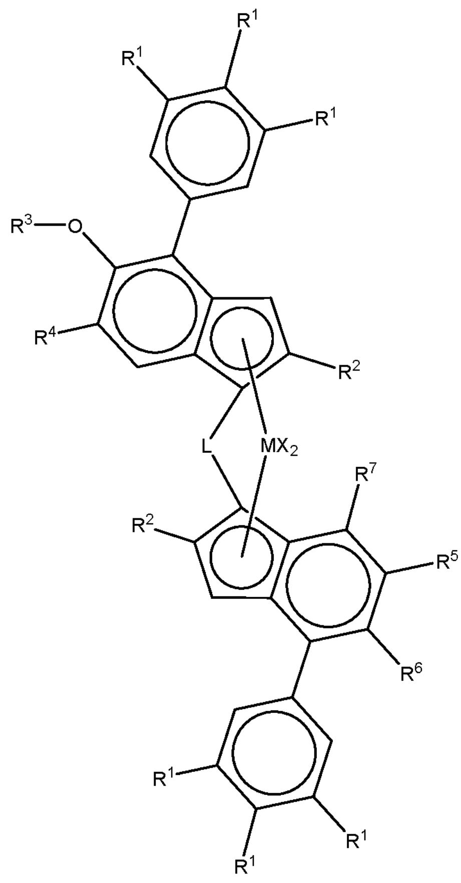

Formel (I)

wobei

M Zr oder Hf ist,
jedes X unabhängig voneinander ein Sigma-Donor-Ligand ist,
L eine zweiwertige Brücke ist, ausgewählt aus $-R'_2C-$, $-R'_2C-CR'_2-$, $-R'_2Si-$, $-R'_2Si-SiR'_2-$, $-R'_2Ge-$, wobei jedes R' unabhängig ein Wasserstoffatom oder eine $C_1$-$C_{20}$-Kohlenwasserstoffgruppe ist, die gegebenenfalls ein oder mehrere Heteroatome der Gruppe 14-16 des Periodensystems oder Fluoratome enthält, oder gegebenenfalls zwei R'-Gruppen zusammengenommen einen Ring bilden können,
jedes $R^1$ unabhängig voneinander gleich ist oder verschieden sein kann und Wasserstoff,
eine lineare oder verzweigte $C_1$-$C_6$-Alkylgruppe, eine $C_{7-20}$-Arylalkyl-, $C_{7-20}$-Alkylaryl- oder $C_{6-20}$-Arylgruppe oder eine OY-Gruppe ist, wobei Y eine $C_{1-10}$-Kohlenwasserstoffgruppe ist, und gegebenenfalls zwei benachbarte R'-Gruppen Teil eines Rings sein können, einschließlich der Phenylkohlenstoffe, an die sie gebunden sind,
jedes $R^2$ unabhängig voneinander gleich ist oder verschieden sein kann und eine $CH_2$-$R^8$ Gruppe ist, wobei

$R^8$ H oder eine lineare oder verzweigte $C_{1-6}$-Alkylgruppe, $C_{3-8}$-Cycloalkylgruppe, $C_{6-10}$-Arylgruppe ist,
$R^3$ eine lineare oder verzweigte $C_1$-$C_6$-Alkylgruppe, $C_{7-20}$-Arylalkyl, $C_{7-20}$-Alkylarylgruppe oder $C_6$-$C_{20}$-Arylgruppe ist,
$R^4$ ist eine $C(R^9)_3$-Gruppe, wobei $R^9$ eine lineare oder verzweigte $C_1$-$C_6$ -Alkylgruppe ist,
$R^5$ ist Wasserstoff oder eine aliphatische $C_1$-$C_{20}$-Kohlenwasserstoffgruppe, die gegebenenfalls ein oder mehrere Heteroatome aus den Gruppen 14-16 des Periodensystems der Elemente enthält;
$R^6$ ist Wasserstoff oder eine aliphatische $C_1$-$C_{20}$-Kohlenwasserstoffgruppe, die gegebenenfalls ein oder mehrere Heteroatome aus den Gruppen 14-16 des Periodensystems der Elemente enthält; oder
$R^5$ und $R^6$ können als Teil eines 5-gliedrigen, mit dem Indenyl kondensierten Rings verbunden sein, der gegebenenfalls durch n Gruppen $R^{10}$ substituiert ist, wobei n von 0 bis 4 reicht;
jedes $R^{10}$ ist gleich oder verschieden und kann eine $C_1$-$C_{20}$-Kohlenwasserstoffgruppe oder ein $C_1$-$C_{20}$ -Kohlenwasserstoffrest sein, der gegebenenfalls ein oder mehrere Heteroatome enthält, die zu den Gruppen 14-16 des Periodensystems der Elemente gehören;
$R^7$ ist H oder eine lineare oder verzweigte $C_1$ -$C_6$ -Alkylgruppe oder eine Aryl- oder Heteroarylgruppe mit 6 bis 20 Kohlenstoffatomen, gegebenenfalls substituiert durch eine bis drei Gruppen $R^{11}$,
jedes $R^{11}$ unabhängig voneinander gleich ist oder verschieden sein kann und Wasserstoff, eine lineare oder verzweigte $C_1$-$C_6$ -Alkylgruppe, eine $C_{7-20}$-Arylalkyl-, $C_{7-20}$-Alkylaryl- oder $C_{6-20}$-Arylgruppe oder eine OY-Gruppe ist, wobei Y eine $C_{1-10}$-Kohlenwasserstoffgruppe ist,

(b) ein Cokatalysatorsystem, das einen Aluminoxan-Cokatalysator umfasst, und
(c) einen Silikat-Träger.

**16.** Verfahren nach Anspruch 14 oder 15, wobei die Schmelze, die das Copolymer (R-PP), das Peroxid und das 1,3-Butadien mischt, in einem Extruder bei einer Zylindertemperatur im Bereich von 40 bis 280 °C schmelzgemischt wird.

**17.** Verfahren nach einem der vorangehenden Ansprüche 14 bis 16, wobei

(a) die Menge 0,10 bis 1,00 Gewichtsteile (ppw) Peroxid pro 100 Gewichtsteile statistisches Propylencopolymer (R-PP) beträgt;
(b) die Menge 0,05 bis 1,50 Gewichtsteile (ppw) bifunktionell ungesättigter Monomere, ausgewählt aus der Gruppe bestehend aus 1,3-Butadien-, Isopren, Dimethylbutadien und Divinylbenzol, insbesondere 1,3-Butadien, pro 100 Gewichtsteile statistisches Propylencopolymer (R-PP) beträgt.

## Revendications

**1.** Polypropylène à haute résistance à l'état fondu (HMS-PP) ayant

(a) une teneur en 1-hexène, sur la base du polypropylène à haute résistance à l'état fondu (HMS-PP), dans la plage de 0,5 à 5,0 % en mole déterminée par la spectroscopie RMN du carbone 13, et
(b) une teneur en éthylène, sur la base du polypropylène à haute résistance à l'état fondu (HMS-PP), dans la plage de 0 à 5,5 % en mole déterminée par la spectroscopie RMN du carbone 13,
dans lequel en outre le polypropylène à haute résistance à l'état fondu (HMS-PP) a
(c) une résistance à l'état fondu F30 d'au moins 24 cN mesurée selon ISO 16790:2005 à une pression en filière de 30 bar, et
(d) 2, 1 régio-défauts dans la plage de 0,01 à 0,90 % déterminés par la spectroscopie RMN du carbone 13.

**2.** Polypropylène à haute résistance à l'état fondu (HMS-PP) selon la revendication 1 ayant un indice de fluidité à l'état fondu $MFR_2$ (230 °C, 2,16 kg) mesuré selon ISO 1133 dans la plage de 0,5 à 4,0 g/10 min.

**3.** Polypropylène à haute résistance à l'état fondu (HMS-PP) selon la revendication 1 ou 2 ayant une teneur en éthylène, sur la base du polypropylène à haute résistance à l'état fondu (HMS-PP), dans la plage de 1,0 à 4,5 % en mole, déterminée par la spectroscopie RMN du carbone 13.

**4.** Polypropylène à haute résistance à l'état fondu (HMS-PP) selon l'une des revendications précédentes ayant une résistance à l'état fondu F30 dans la plage de 25,0 à 60,0 cN mesurée selon ISO 16790:2005 à une pression en filière de 30 bar et optionnellement une extensibilité à la fusion V30 d'au moins 245 mm/s, de préférence dans la plage de 248 à 300 mm/s, mesurée selon ISO 16790:2005 à une pression en filière de 30 bar.

5. Polypropylène à haute résistance à l'état fondu (HMS-PP) selon l'une des revendications précédentes ayant une fraction insoluble à chaud dans le xylène (XHU) en une quantité non supérieure à 0,20 % en poids, de préférence en une quantité dans la plage de 0,01 à 0,20 % en poids, mesurée selon DIN EN 579.

6. Polypropylène à haute résistance à l'état fondu (HMS-PP) selon l'une des revendications précédentes ayant

(a) une température de fusion Tm dans la plage de 133 à 145 °C mesurée par DSC selon ISO 11357-3 (vitesse de chauffage et de refroidissement de 10 °C/min) et
(b) optionnellement une température de cristallisation Tc dans la plage de 95 à 110 °C mesurée par DSC selon ISO 11357-3 (vitesse de chauffage et de refroidissement de 10 °C/min).

7. Polypropylène à haute résistance à l'état fondu (HMS-PP) selon l'une des revendications précédentes ayant une fraction soluble à froid dans le xylène (XCS) dans la plage mesurée selon ISO 16152 (25 °C) dans la plage de 0,5 à 3,5 % en poids.

8. Polypropylène à haute résistance à l'état fondu (HMS-PP) selon l'une des revendications précédentes obtenu en traitant un copolymère (R-PP) aléatoire de propylène avec du peroxyde et des monomères insaturés bifonctionnels sélectionnés dans le groupe consistant en du 1,3-butadiène, de l'isoprène, du diméthylbutadiène et du divinylbenzène, en particulier avec du peroxyde et du 1,3-butadiène, dans lequel le copolymère (R-PP) aléatoire de propylène a

(a) une teneur en hexène dans la plage de 0,5 à 5,0 % en mole, sur la base du copolymère (R-PP) aléatoire de propylène, déterminée par la spectroscopie RMN du carbone 13, et
(b) une teneur en éthylène dans la plage de 0 à 5,5 % en mole, sur la base du copolymère (R-PP) aléatoire de propylène, déterminée par la spectroscopie RMN du carbone 13.

9. Polypropylène à haute résistance à l'état fondu (HMS-PP) selon la revendication 8 dans lequel le copolymère (R-PP) aléatoire de propylène comprend une première fraction de polymère de propylène (PP-1) et une seconde fraction de polymère de propylène (PP-2),
dans lequel en outre

(a) le rapport de poids entre la première fraction de polymère de propylène (PP-1) et la seconde fraction de polymère de propylène (PP-2) [PP-1/PP-2] est dans la plage de 50/50 à 70/30 en % en poids, et
(b) optionnellement la quantité totale de la première fraction de polymère de propylène (PP-1) et de la seconde fraction de polymère de propylène (PP-2), sur la base de la quantité totale du copolymère (R-PP) aléatoire de propylène, est au moins de 90 % en poids,
et dans lequel encore en outre
(c) la première fraction de polymère de propylène (PP-1) a

(a) une teneur en 1-hexène, sur la base de la première fraction de polymère de propylène (PP-1), dans la plage de 0,2 à 3,0 % en mole déterminée par la spectroscopie RMN du carbone 13, et
(β) une teneur en éthylène, sur la base de la première fraction de polymère de propylène (PP-1), dans la plage de 0,0 à 5,0 % en mole déterminée par la spectroscopie RMN du carbone 13,

(d) la seconde fraction de polymère de propylène (PP-2) a

(a) une teneur en 1-hexène, sur la base de la seconde fraction de polymère de propylène (PP-2), dans la plage de 1,5 à 6,0 % en mole, déterminée par la spectroscopie RMN du carbone 13, et
(β) une teneur en éthylène, sur la base de la seconde fraction de polymère de propylène (PP-2), dans la plage de 0,0 à 12,0 % en mole, déterminée par la spectroscopie RMN du carbone 13.

10. Polypropylène à haute résistance à l'état fondu (HMS-PP) selon la revendication 9 dans lequel la première fraction de polymère de propylène (PP-1) est un copolymère de propylène et de 1-hexène et la seconde fraction de polymère de propylène (PP-2) est un terpolymère de propylène, de 1-hexène et d'éthylène ;
dans lequel en outre

(a) la première fraction de polymère de propylène (PP-1) a une teneur en hexène, sur la base de la première fraction de polymère de propylène (PP-1), dans la plage de 0,2 à 3,0 % en mole déterminée par la spectroscopie RMN du carbone 13, et

(b) la seconde fraction de polymère de propylène (PP-2) a une teneur en hexène, sur la base de la seconde fraction de polymère de propylène (PP-2), dans la plage de 1,5 à 5,0 % en mole, déterminée par la spectroscopie RMN du carbone 13 et une teneur en éthylène, sur la base de la seconde fraction de polymère de propylène (PP-2), dans la plage de 4,5 à 12,0 % en mole déterminée par la spectroscopie RMN du carbone 13, de préférence à condition que
(c) la teneur en 1-hexène dans la seconde fraction de polymère de propylène (PP-2) soit d'au moins 0,5 % en mole, par exemple de 0,5 à 3,5 % en mole, par rapport à dans la première fraction de polymère de propylène (PP-1) .

**11.** Polypropylène à haute résistance à l'état fondu (HMS-PP) selon l'une des revendications précédentes qui est produit selon l'une des revendications 14 à 17.

**12.** Utilisation du polypropylène à haute résistance à l'état fondu (HMS-PP) selon l'une des revendications précédentes pour fabriquer un article expansé.

**13.** Article expansé comprenant au moins 90 % en poids, sur la base du poids total de la mousse, du polypropylène à haute résistance à l'état fondu (HMS-PP) selon l'une des revendications précédentes 1 à 11.

**14.** Procédé pour produire le polypropylène à haute résistance à l'état fondu (HMS-PP) selon l'une des revendications précédentes 1 à 10 comprenant les étapes suivantes :

(a) la polymérisation de propylène et de 1-hexène et optionnellement d'éthylène en présence d'un système de catalyseur à site unique pour produire un copolymère (R-PP) de propylène, de 1-hexène et optionnellement d'éthylène ;
(b) la récupération dudit copolymère (R-PP) ;
(c) l'extrusion dudit copolymère en présence d'un peroxyde et de 1,3-butadiène pour introduire une ramification à longue chaîne dans ledit copolymère (R-PP), obtenant ainsi le polypropylène à haute résistance à l'état fondu (HMS-PP) ;
(d) la récupération du polypropylène à haute résistance à l'état fondu (HMS-PP).

**15.** Procédé selon la revendication 14 dans lequel le système de catalyseur à site unique comprend

(a) un complexe métallocène de formule (I) :

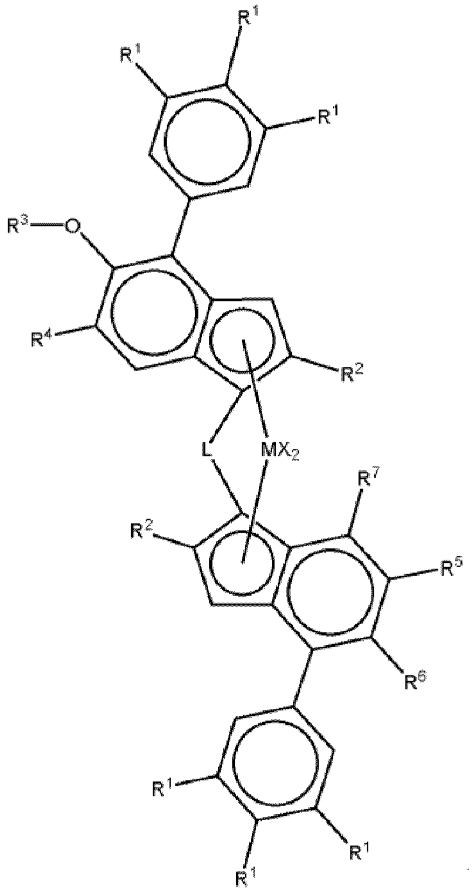

Formule (I)

dans laquelle

M est Zr ou Hf
chaque X est indépendamment un ligand donneur sigma,
L est un pont divalent sélectionné parmi $-R'_2C-$,$-R'_2C-CR'_2-$, $-R'_2Si-$, $-R'_2Si-SiR'_2-$, $-R'_2Ge-$, dans laquelle chaque R' est indépendamment un atome d'hydrogène ou un groupe hydrocarbyle en $C_1$-$C_{20}$ contenant optionnellement un ou plusieurs hétéroatomes des groupes 14 à 16 du tableau périodique ou atomes de fluor, ou optionnellement deux groupes R' pris ensemble peuvent former un cycle,
chaque $R^1$ est indépendamment identique ou peut être différent et est de l'hydrogène, un groupe alkyle en $C_1$-$C_6$ linéaire ou ramifié, un arylalkyle en $C_{7-20}$, un groupe alkylaryle en $C_{7-20}$ ou un groupe aryle en $C_{6-20}$ ou un groupe OY, dans lequel Y est un groupe hydrocarbyle en $C_{1-10}$, et optionnellement deux groupes $R^1$ adjacents peuvent faire partie d'un cycle comportant les carbones phényliques auxquels ils sont liés,
chaque $R^2$ indépendamment est identique ou peut être différent et est un groupe $CH_2$-$R^8$, $R^8$ étant H ou un groupe alkyle en $C_{1-6}$ linéaire ou ramifié, un groupe cycloalkyle en $C_{3-8}$, un groupe aryle en $C_{6-10}$, $R^3$ est un groupe alkyle en $C_1$-$C_6$ linéaire ou ramifié, un arylalkyle en $C_{7-20}$, un groupe alkylaryle en $C_{7-20}$ ou un groupe aryle en $C_6$-$C_{20}$,
$R^4$ est un groupe $C(R^9)_3$, $R^9$ étant un groupe alkyle en $C_1$-$C_6$ linéaire ou ramifié,
$R^5$ est de l'hydrogène ou un groupe hydrocarbyle en $C_1$-$C_{20}$ aliphatique contenant optionnellement un ou plusieurs hétéroatomes des groupes 14 à 16 du tableau périodique des éléments ;
$R^6$ est de l'hydrogène ou un groupe hydrocarbyle en $C_1$-$C_{20}$ aliphatique contenant optionnellement un ou plusieurs hétéroatomes des groupes 14 à 16 du tableau périodique des éléments ; ou
$R^5$ et $R^6$ peuvent être joints en tant que partie d'un cycle à 5 chaînons condensé avec l'indényle, qui est optionnellement substitué par n groupes $R^{10}$, n étant de 0 à 4 ;
chaque $R^{10}$ est identique ou différent et peut être un groupe hydrocarbyle en $C_1$-$C_{20}$ ou un radical hydrocarbyle en $C_1$-$C_{20}$ contenant optionnellement un ou plusieurs hétéroatomes appartenant aux groupes 14 à 16 du tableau périodique des éléments ;
$R^7$ est H ou un groupe alkyle en $C_1$-$C_6$ linéaire ou ramifié ou un groupe aryle ou hétéroaryle ayant 6 à 20 atomes de carbone optionnellement substitués par un à trois groupes $R^{11}$,

chaque $R^{11}$ est indépendamment identique ou peut être différent et est de l'hydrogène, un groupe alkyle en $C_1$-$C_6$ linéaire ou ramifié, un arylalkyle en $C_{7-20}$, un groupe alkylaryle en $C_{7-20}$ ou un groupe aryle en $C_{6-20}$ ou un groupe OY, dans lequel Y est un groupe hydrocarbyle en $C_{1-10}$,

(b) un système de cocatalyseur comprenant un cocatalyseur à l'aluminoxane, et
(c) un support de silice.

**16.** Procédé selon la revendication 14 ou 15, dans lequel le mélange à l'état fondu du copolymère (R-PP), du peroxyde et du 1,3-butadiène sont mélangés à l'état fondu dans une extrudeuse à une température de cylindre dans la plage de 40 à 280 °C.

**17.** Procédé selon l'une des revendications précédentes 14 à 16, dans lequel

(a) la quantité est de 0,10 à 1,00 partie en poids (ppw) de peroxyde pour 100 parties en poids de copolymère (R-PP) aléatoire de propylène ;
(b) la quantité est de 0,05 à 1,50 partie en poids (ppw) de monomères insaturés bifonctionnels sélectionnés dans le groupe consistant en du 1,3-butadiène, de l'isoprène, du diméthylbutadiène et du divinylbenzène, en particulier du 1,3-butadiène, pour 100 parties en poids de copolymère (R-PP) aléatoire de propylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 105440216 A
- EP 0887379 A
- WO 9212182 A
- WO 2004000899 A
- WO 2004111095 A
- WO 9924478 A
- WO 9924479 A
- WO 0068315 A
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 9414856 A
- WO 9512622 A
- WO 2006097497 A
- EP 18282666 A
- WO 2013007650 A
- EP 2520425 A1
- EP 3018153 A


### Non-patent literature cited in the description


- Rheotens-Mastercurves and Drawability of Polymer Melts. **M. H. WAGNER.** Polymer Engineering and Sience. vol. 36, 925-935
- **KLIMKE, K ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W ; WILHELM, M.** *Macromol. Chem. Phys.,* 2007, vol. 208, 2128
- **CASTIGNOLLES, P. ; GRAF, R ; PARKINSON, M ; WILHELM, M ; GABORIEAU, M.** *Polymer,* 2009, vol. 50, 2373
- **KLIMKE, K ; PARKINSON, M. ; PIEL, C ; KAMINSKY, W ; SPIESS, H.W ; WILHELM, M.** *Macromol. Chem. Phys.,* 2006, vol. 207, 382
- **POLLARD, M. ; KLIMKE, K. ; GRAF, R ; SPIESS, H.W ; WILHELM, M ; SPERBER, O. ; PIEL, C. ; KAMINSKY, W.** *Macromolecules,* 2004, vol. 37, 813
- **FILIP, X ; TRIPON, C. ; FILIP, C.** *J. Mag. Resn.,* 2005, vol. 176, 239
- **GRIFFIN, J.M ; TRIPON, C ; SAMOSON, A ; FILIP, C. ; BROWN, S.P.** *Mag. Res. in Chem.,* 2007, vol. 45 (S1), S198
- **RESCONI, L ; CAVALLO, L ; FAIT, A.** *Piemontesi, F., Chem. Rev.,* 2000, vol. 100, 1253
- *CHEMICAL ABSTRACTS,* 2372-21-6